# EUROPEAN PATENT SPECIFICATION

(11) **EP 0 883 631 B1**
(45) Date of publication and mention of the grant of the patent: **20.10.1999**
(21) Application number: 97906127.2
(22) Date of filing: 26.02.1997
(51) Int. Cl.: C08F 4/00, C07F 9/54, C07C 211/03, C07C 31/10, C07C 321/04, C08F 297/02, C08F 8/06, C08F 8/30, C08F 8/34, C08G 81/02

(54) **METHOD FOR PREPARING (CO)POLYMERS HAVING A NARROW MOLECULAR WEIGHT DISTRIBUTION**
VERFAHREN ZUR HERSTELLUNG VON (CO)POLYMEREN MIT EINER ENGEN MOLMASSEVERTEILUNG
PROCEDE POUR PREPARER DES (CO)POLYMERES AYANT UNE DISTRIBUTION ETROITE DU POIDS MOLECULAIRE

(30) Priority: 01.03.1996 US 609732
(43) Date of publication of application: 16.12.1998
(73) Proprietor: BASF AKTIENGESELLSCHAFT, 67056 Ludwigshafen (DE)
(72) Inventor: MEHLER, Christof, D-67061 Ludwigshafen (DE); HOGEN-ESCH, Thieo, E., South Pasadena, CA 91030 (US); MÜLLER, Axel, D-65193 Wiesbaden (DE); ZAGALA, Angela, Naperville, IL 60564-9480 (US)
(86) International application number: EP9700902
(87) International publication number: WO9731953

(56) References cited:
- US-A- 5 610 248
- MACROMOL. SYMP., vol.107, 1996 pages 265 - 283, XP000625151 C. TSVETANOV ET AL. 'tetraalkylammonium salts as additives in anionic polymerization of methyl methacrylate'
- DIE MAKROMOLEKULARE CHEMIE, vol.161, 1972 pages 139 - 160, XP002032812 V. JAACKS ET AL. 'Über den Mechanismus der anionischen Polymerisation von Acrylnitril mit Triphenylphosphin. 7. Mitt. über Makrozwitterionen'
- THE JOURNAL OF ORGANIC CHEMISTRY, vol.41, no.11, 1976 pages 1889 - 1895, XP002032813 D. WILEY ET AL. 'Hydrogen cyanide chemistry. 6. Cyanogen condensation with Cyanide, C7N7-'

## Description

### Technical Field

The present invention concerns novel block copolymers and a novel method for the anionic (co)polymerization of anionically (co)polymerizable monomers (preferably, of acrylic and/or methacrylic acid derivatives and of structurally related monomers) in the presence of phosphonium salts of resonance-stabilized nitrogen, oxygen or sulfur anions. The present (co)polymers, and (co)polymers produced by the present process, have a well-defined molecular weight and narrow molecular weight distribution.

### Background Art

The controlled polymerization of (meth)acrylates under moderate conditions has been at the center of interest of numerous research groups for a long time.¹ For instance, an example of one approach developed in the 1980s was group transfer polymerization (GTP), although this approach requires expensive initiators and catalysts.² Moreover, coordinating ligands such as metallated alkoxide³ and lithium chloride⁴ have been used in the anionic polymerization of MMA, with adequate control being achieved only at temperatures < -40°C. Other polymerization systems, such as catalytic chain-transfer polymerization,¹ "living" free-radical polymerization,^{1,5} "metal-free,"⁶ "coordinative,"⁷"screened,"⁸ "high-speed immortal"⁹ and crown ether enhanced^{4a,10} anionic polymerization reactions, have been successful to differing degrees in the preparation of PMMA of narrow molecular mass distribution at moderate temperatures. n-Butyl acrylate has been anionically polymerized at 20°C by metal-free polymerization using tetrabutylammonium counterions,⁶ which is sensitive due to the instability of the initiators. A distinct improvement on this method is constituted by the anionic polymerization in the presence of tetraphenylphosphonium counterions. ¹¹
¹. Review Article: Davis, T., Haddleton, D., Richards, S.J.M.S. Rev. Macromol. Chem. Phys. 1994, C34, 243.
². (a) Webster, O., Hertler, W., Sogah, D., Farnham, W. and RajanBabu, T. J. Am. Chem. Soc. 1983, 105, 5706; (b) Sogah, D., Hertler, W., Webster, O. and Cohen, G. Macromolecules 1988, 20, 1473.
³. Lochmann, L., Muller, A. Makromol. Chem. 1990, 191, 1657.
⁴. Teyssie, P., Fayt, R., Hautekeer, J., Jacobs, C., Jerome, R., Leemans, L., Varshney, S. Makromol. Chem., Macromol. Symp. 1990, 32, 61; (b) Wang, J., Jerome, R., Teyssie, P. Macromolecules 1994, 27, 4902.
⁵. (a) Otsu, T. and Tazaki, T. Polym. Bull. 1986, 16, 277; (b) Georges, M., Veregin, R., Kazmaier, P., Hamer, G. Macromolecules 1993, 26, 2987; (c) Druliner, J. Macromolecules 1991, 24, 6079; (d) Mardare, D. and Matyjaszewski, K. Polymer Preprints (Am. Chem. Soc., Div. Polym. Chem.) 1993, 34, 566.
⁶. (a) Reetz, M., Knauf, T., Minet, U. and Bingel, C. Angew. Chem. Int. Ed. Engl. 1988, 27, 1371; (b) Reetz, M., Minet, U., Bingel, C. and Vogdanis, L. Polymer Preprints (Am. Chem. Soc., Div. Polym. Chem.) 1991, 32, 296; (d) Pietzonka, T. and Seebach, D. Angew. Chem. Int. Ed. Engl. 1993, 32, 716.
⁷. (a) Yasuda, H., Yamamoto, H., Yokota, K., Miyake, S. and Nakamura, A. J. Am. Chem. Soc. 1992, 114, 4908; (b) Yasuda, H., Yamamoto, H., Yamashita, M., Yokota, K., Nakamura, A., Miyake, S., Kai, Y. and Kanehisa, N. Macromolecules 1993, 26, 7134.
⁸. Ballard, D., Bowles, R., Haddleton, D., Richards, S., Sellens, R. and Twose, D. Macromolecules 1992, 25, 5907.
⁹. (a) Sugimoto, H., Kuroki, M., Watanabe, T., Kawamura, C., Aida, T. and Inoue, S. Macromolecules 1993, 26, 3403; (b) Akatsuka, M., Aida, T. and Inoue, S. Macromolecules 1994, 27, 2820.
¹⁰. (a) Varshney, S., Jerome, R., Bayard, P., Jacobs, C., Fayt, R. and Teyssie, P. Macromolecules 1992, 25, 4457; (b) Wang, J., Jerome, R., Bayard, P., Baylac, L., Patin, M. and Teyssie, P. Macromolecules 1994, 27, 4615.
¹¹. T. Hogen-Esch and A. Zagala, U.S. Patent application Serial No. 08/398,694.

### OBJECTS OF THE INVENTION

Accordingly, one object of the present invention is to provide a process for the preparation of polymers and copolymers of defined molecular mass and narrow molecular mass distribution.

It is a further object of the present invention to provide a novel method for preparing polymers and copolymers which enables maximum structural variation and, at the same time, permits controlled anionic (co)polymerization of anionically polymerizable monomers at room temperature.

It is a further object of the present invention to provide a novel method for anionically producing poly(meth)acrylate (co)polymers which provides a (co)polymer having a narrow molecular weight distribution.

It is a further object of the present invention to provide a novel method for producing poly(meth)acrylate (co)polymers by anionic polymerization which provides effective control of (co)polymer molecular weight.

It is a further object of the present invention to provide a novel method for producing poly(meth)acrylate (co)polymers by anionic polymerization which can provide effective control of (co)polymer stereoregularity (e.g., isotacticity and/or syndiotacticity).

It is a further object of the present invention to provide a novel method for producing poly(meth)acrylate (co)polymers by anionic polymerization which provides the (co)polymer in good yields.

It is a further object of the present invention to provide a novel method for producing poly(meth)acrylate (co)polymers which achieves the above objects at ambient temperatures.

These and other objects, which will become apparent in the following detailed description of the preferred embodiments, have been provided by a method for producing a (co)polymer, which comprises:
reacting an anionically polymerizable monomer of the formula: 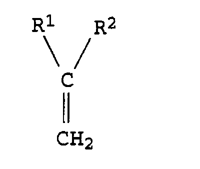 with an initiator of the formula

   (PR⁶R⁷R⁸R⁹) + (R¹⁰R¹¹N)-

   (PR⁶R⁷R⁸R⁹) + (R¹²O)-

   or

   (PR⁶R⁷R⁸R⁹) + (R¹³S)-

   at a temperature of from -78°C to 40°C, in a solvent in which the initiator at least partially dissolves and which does not quench the reaction, for a length of time sufficient to polymerize the monomer(s) and form a reaction mixture, wherein:
   R¹ is selected from the group consisting of H, CN, straight-chain or branched alkyl of from 1 to 6 carbon atoms (which may be substituted with from 1 to (2n+1) halogen atoms, where n is the number of carbon atoms in the alkyl group [e.g., CF₃]), straight-chain or branched alkenyl of from 2 to 6 carbon atoms (which may be substituted with from 1 to (2n-1) halogen atoms, where n is the number of carbon atoms in the alkenyl group), straight-chain or branched alkynyl of from 2 to 6 carbon atoms (which may be substituted with from 1 to (2n-3) halogen atoms, where n is the number of carbon atoms in the alkynyl group) and aryl, and
   R² is independently selected from the group consisting of CN, C(=X) R³, C(=X)NR⁴R⁵ and heterocyclic rings capable of stabilizing an α-anion, where X is NR (R is C₁-C₂₀ alkyl), O or S; R³ is alkyl of from 1 to 20 Carbon atoms, alkoxy of from 1 to 20 Carbon atoms or alkylthio of from 1 to 20 Carbon atoms; and R⁴ and R⁵ are independently alkyl of from 1 to 20 Carbon atoms or are joined together to form an alkylene group of from 2 to 5 carbon atoms, thus forming a 3- to 6-membered ring;
   R⁶, R⁷, R⁸ and R⁹ are independently alkyl of from 1 to 20 Carbon atoms, aryl or aralkyl, and any pair of R⁶, R⁷, R⁸ and R⁹ may be joined to form a ring, including the possibility that both pairs of R⁶⁻R⁹ may be joined to form a ring (preferably a 3- to 8-membered ring),
   R¹⁰ and R¹¹ are independently alkyl of from 1 to 20°Carbon atoms, cycloalkyl of from 3 to 10 carbon atoms, an aryl group, a trialkylsilyl group or an electronegative group, or R¹⁰ and R¹¹ may be joined together to form a heterocycle, and
   R¹² is H, straight-chain or branched alkyl of from 1 to 20 Carbon atoms or cycloalkyl of from 3 to 10 carbon atoms which may contain one or more remote sites of unsaturation, aryl, aralkyl or a (co)polymer radical;
   R¹³ is independently R¹², straight-chain or branched alkenyl of from 2 to 20 Carbon atoms, or straight-chain or branched alkynyl of from 2 to 20 Carbon atoms;
quenching the reaction mixture with an acyl halide, an acid anhydride or a substance containing an active hydrogen atom to form a (co)polymer; and
isolating the formed (co)polymer.

### Best Mode for Carrying Out the Invention

The present process can be used to make polymers and copolymers (hereinafter "(co)polymers") from a wide variety of monomers. Anionically polymerizable vinyl monomers suitable for the present process should bear at least one electron-withdrawing and/or formal negative charge-stabilizing group, such as an ester group, a cyano group, a keto group, a sulfone group, a phosphonate group, a heterocyclic ring, a phenyl ring bearing one or more electron-withdrawing and/or formal negative charge-stabilizing substituents, etc. The initiator can be any stabilized nitrogen, oxygen or sulfur anion sufficiently reactive to polymerize an anionically polymerizable monomer. One key to the present process involving the anionic, metal-free polymerization of a vinyl monomer lies in the use of a stable phosphonium counteraction.

The present invention provides (co)polymers, and particularly poly(meth)acrylates, having a relatively narrow molecular weight distribution, in quantitative yields at ambient temperatures. Molecular weights of the (co)polymers produced by the present process, which may be weight average or number average molecular weights, may be controlled by controlling the molar ratio of initiator to monomer, and may range from 500 g/mol to 300,000 g/mol, preferably from 1,000 to 200,000 g/mol, and most preferably from 2,000 to 60,000 g/mol. In the context of the present application, the term "monodisperse" refers to a (co)polymer having a weight average molecular weight (M_{w})/number average molecular weight (Mₙ) of ≤ 2.0, preferably ≤ 1.5, and most preferably ≤ 1.1.

Because the present reacting step is a "living" polymerization, the process can be applied to preparation of block and multiblock copolymers. The bulky phosphonium cations are believed to prevent intramolecular cation coordination to the ante-penultimate ester carbonyl group.

Polymers produced using the present process have a variety of uses. For example, PMMA is the polymer used to make PLEXIGLAS. Furthermore, the polymers produced by the present method are sufficiently monodisperse as to provide PMMA or other polymer standards for size exclusion chromatography.

Monomers suitable for polymerization in the present method include those of the formula: 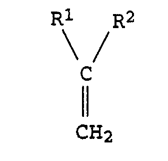 wherein:
R¹ is selected from the group consisting of H, CN, straight-chain or branched alkyl of from 1 to 6 carbon atoms (which may be substituted with from 1 to (2n+1) halogen, preferably fluorine, atoms, where n is the number of carbon atoms in the alkyl group [e.g., CF₃]), straight-chain or branched alkenyl of from 2 to 6 carbon atoms (which may be substituted with from 1 to (2n-1) halogen, preferably fluorine, atoms, where n is the number of carbon atoms in the alkenyl group), straight-chain or branched alkynyl of from 2 to 6 carbon atoms (which may be substituted with from 1 to (2n-3) halogen atoms, where n is the number of carbon atoms in the alkynyl group) and aryl, and
R² is independently selected from the group consisting of CN, C(=X) R³, C(=X)NR⁴R⁵ and negative charge stabilizing heterocyclic rings, where X is NR (R is C₁-C₂₀ alkyl), O or S; R³ is alkyl of from 1 to 20 Carbon atoms, alkoxy of from 1 to 20 Carbon atoms or alkylthio of from 1 to 20 Carbon atoms; and R⁴ and R⁵ are independently alkyl of from 1 to 20 Carbon atoms or are joined together to form an alkylene group of from 2 to 5 carbon atoms, thus forming a 3- to 6-membered ring.

In the context of the present invention, "aryl" refers to phenyl sand naphthyl, which may be substituted from 1 to 5 times (in the case of phenyl) or from 1 to 7 times (in the case of naphthyl) and preferably from 1 to 3 times (in both cases) with alkyl of from 1 to 20 Carbon atoms, alkyl of from 1 to 6 carbon atoms (preferably methyl) in which each of the hydrogen atoms may be independently replaced by a halide (preferably a fluoride or a chloride), alkenyl of from 2 to 20 Carbon atoms, alkynyl of from 1 to 20 Carbon atoms, alkoxy of from 1 to 6 carbon atoms, alkylthio of from 1 to 6 carbon atoms, phenyl, halogen, C₁-C₆-dialkylamino, and phenyl which may be substituted with from 1 to 5 halogen atoms and/or C₁-C₄ alkyl groups. In the present application, "aryl" may also refer to pyridyl, preferably 2-pyridyl. More preferably, "aryl" refers to phenyl, phenyl substituted from 1 to 5 times with fluorine or chlorine, and phenyl substituted from 1 to 3 times with a substituent selected from the group consisting of alkyl of from 1 to 6 carbon atoms, alkoxy of from 1 to 4 carbon atoms and phenyl. Most preferably, "aryl" refers to phenyl. In the present application, "arylene" refers to arenediyl, or a divalent aryl group as defined above (i.e., an aryl group having a second substituent or a second position at which a radical exists).

In the context of the present invention, "heterocyclic rings capable of stabilizing an α-anion" refer to those heterocyclic rings which can stabilize a formal negative charge at a carbon atom covalently bound to the heterocyclic ring, such as is postulated for "living" anionic polymers. Thus, the vinyl group undergoing polymerization should be attached to the heterocyclic ring such that one or more of the heteroatoms in the heterocyclic ring stabilizes the negative charge on the "living" polymer intermediate. Accordingly, suitable vinyl heterocycles include 2-vinyl pyridine, 6-vinyl pyridine, 2-vinyl pyrrole, 5-vinyl pyrrole, 2-vinyl oxazole, 5-vinyl oxazole, 2-vinyl thiazole, 5-vinyl thiazole, 2-vinyl imidazole, 5-vinyl imidazole, 3-vinyl pyrazole, 5-vinyl pyrazole, 3-vinyl pyridazine, 6-vinyl pyridazine, 3-vinyl isoxazole, 3-vinyl isothiazoles, 2-vinyl pyrimidine, 4-vinyl pyrimidine, 6-vinyl pyrimidine, and any vinyl pyrazine. The vinyl heterocycles mentioned above may bear one or more (preferably 1 or 2) C₁-C₆ alkyl or alkoxy groups, cyano groups, ester groups or halogen atoms. Further, those vinyl heterocycles which, when unsubstituted, contain an N-H group are protected at that position with a conventional blocking or protecting group, such as a C₁-C₆ alkyl group, a tris-C₁-C₆ alkyl silyl group, an acyl group of the formula R²⁸CO (defined below), etc.

More specifically, preferred monomers include (meth)acrylate esters of C₁-C₂₀ alcohols, acrylonitrile, cyanoacrylate esters of C₁-C₂₀ alcohols, didehydromalonate esters of C₁-C₆ alcohols, vinyl pyridines, vinyl N-alkylpyrroles, vinyl oxazoles, vinyl thiazoles, vinyl pyrimidines and vinyl imidazoles, vinyl ketones in which the -carbon atom of the alkyl group does not bear a hydrogen atom (e.g., vinyl C₁-C₆-alkyl ketones in which both -hydrogens are replaced with C₁-C₄ alkyl, halogen, etc., or a vinyl phenyl ketone in which the phenyl may be substituted with 1-5 C₁-C₆-alkyl groups), and styrenes bearing electron- donating and electron-withdrawing groups on the phenyl ring (e.g., one or more halogen atoms, nitro groups, C₁-C₆ ester groups or cyano groups). The most preferred monomer is methyl methacrylate (MMA).

Suitable initiators include those of the formula:

(PR⁶R⁷R⁸R⁹)+ (R¹⁰R¹¹N)-

(PR⁶R⁷R⁸R⁹) + (R¹²O)-

or

(PR⁶R⁷R⁸R⁹)+ (R¹³S)-

wherein:
R⁶, R⁷, R⁸ and R⁹ are independently alkyl of from 1 to 20 Carbon atoms, aryl (as defined above) or aralkyl,
R¹⁰ and R¹¹ are independently alkyl of from 1 to 20 Carbon atoms, cycloalkyl of from 3 to 10 Carbon atoms, an aryl group, an electronegative group or are joined to form a heterocyclic ring,
R¹² is H, straight-chain or branched alkyl of from 1 to 20 Carbon atoms or cycloalkyl of from 3 to 10 Carbon atoms which may contain one or more remote sites of unsaturation, aryl, aralkyl or a (co)polymer radical, and
R¹³ is independently R¹², straight-chain or branched alkenyl of from 2 to 20 Carbon atoms, or straight-chain or branched alkynyl of from 2 to 20 Carbon atoms.

In the context of the present invention, "alkyl of from 1 to 20 Carbon atoms containing one or more remote sites of unsaturation" refers to such an alkyl group having one or more carbon-carbon double bonds and/or triple bonds at positions no closer than two carbon atoms from the atom to which the alkyl group is bound (e.g., a β,γ-double bond). Examples of such a group include a prop-2-enyl or but-2-enyl group.

In the context of the present invention, "aralkyl" means aryl-substituted alkyl. Preferably, "aralkyl" is an aryl-substituted C₁-C₂₀-alkyl group, more preferably an aryl-substituted C₁-C₆-alkyl group.

Preferably, when one or more of R⁶, R⁷, R⁸ and R⁹ are aryl or aralkyl, the aryl moiety is phenyl, naphthyl, phenyl having from 1 to 5 substituents or naphthyl having from 1 to 7 substituents, the substituents being independently selected from the group consisting of alkyl of from 1 to 6 carbon atoms, alkoxy of from 1 to 6 carbon atoms, alkylthio of from 1 to 6 carbon atoms and NR¹⁴R¹⁵ in which R¹⁴ and R¹⁵ are independently alkyl of from 1 to 6 carbon atoms. Most preferably, each of R⁶, R⁷, R⁸ and R⁹ is phenyl.

Preferably, R¹⁰ and R¹¹ are independently an electronegative group (as defined below), straight-chain or branched alkyl of from 1 to 6 carbon atoms, cycloalkyl of from 5 to 6 carbon atoms, trimethylsilyl, dimethyl-t-butylsilyl, dimethyl-t-hexylsilyl, phenyl or phenyl having from 1 to 3 substituents selected from the group consisting of alkyl of from 1 to 6 carbon atoms, alkoxy of from 1 to 4 carbon atoms, phenyl and halogen.

In the context of the present invention, an "electronegative group" preferably includes groups of the formula
-C(O)OR, -C(O)H, -C(O)N(R)₂, -C(O)SR, -CN, -S(O)R, -SO₂R, -SO₃R, -NO₂, -P(O) (OR)₂, -P(O) (R)₂, -P(O) (OR) (R), -P(O) (OR'O), -P(O)(NR₂)(R), -P(O) (NR₂)₂ and -P(O)([NR]R'[NR]), where R is (independently if more than one R group is present) alkyl or aryl, preferably C₁-C₆ alkyl, benzyl or phenyl, and R' is alkylene or arylene, preferably C₂-C₄ alkylene or 1,2-phenylene. More preferred electronegative groups includes groups of the formula-C(O)OR, -C(O)H, -C(O)N(R)₂, -C(O)SR, -CN, -SO₂R, -NO₂, and-P(O)(OR)₂, where R is (independently if more than one R group is present) C₁-C₄ alkyl.

Examples of R¹⁰ and R¹¹ being joined together to form a heterocyclic ring include, for example, the following, which may be substituted or unsubstituted:

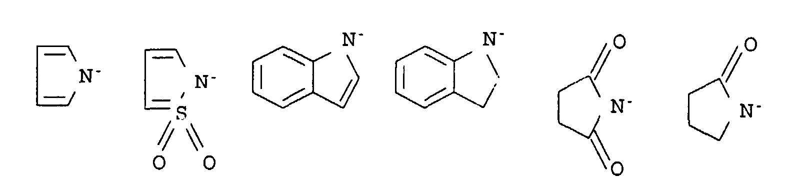

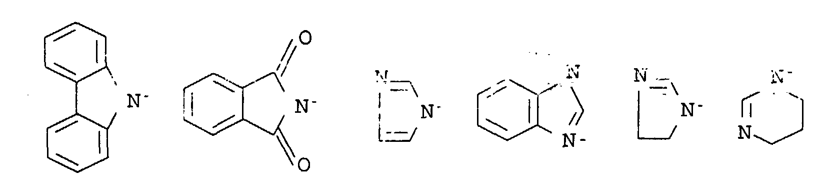

Examples of substituents suitable for substituted R¹⁰ and R¹¹ heterocyclic rings include, for example, alkyl, phenyl, vinyl, halogen, nitro or cyano, which may be attached in each case to one or more of the different carbon atoms of the heterocyclic ring.

R¹² is alkyl or cycloalkyl which may be remotely unsaturated, aryl, aralkyl or a group capable of stabilizing an oxyanion or sulfur anion. R¹³ is R¹², straight-chain or branched alkenyl of from 2 to 20 Carbon atoms, or straight-chain or branched alkynyl of from 2 to 20 Carbon atoms. Preferably, R¹³ is a group of the formula -CR¹⁶=CR¹⁷R¹⁸, where R¹⁶, R¹⁷ and R¹⁸ independently are H, alkyl, aryl, alkoxy or phenoxy, and more preferably, H, alkyl of from 1 to 6 carbon atoms, phenyl, or phenyl having from 1 to 3 substituents selected from the group consisting of alkyl of from 1 to 6 carbon atoms, alkoxy of from 1 to 4 carbon atoms, phenyl and halogen.

These initiators can be conveniently prepared by cation exchange (metathesis) at -78°C from the corresponding (a) alkali metal salts of nitrogen (amide), oxygen or sulfur anions and (b) phosphonium halide salts. The alkali metal amide, oxide (alcoholate) or sulfide (thiolate) salts can be prepared in accordance with known procedures (e.g., treatment of a compound of the formula R¹⁰R¹¹NH, R¹²OH or R¹³SH with an alkali metal hydride reagent; direct treatment of the compound of the formula R¹⁰R¹¹NH, R¹²OH or R¹³SH with an alkali metal; etc.). Alkali metals include lithium, sodium, potassium, rubidium and cesium, preferably potassium, rubidium and cesium, and most preferably potassium.

Many phosphonium halide reagents are commercially available. Others can be made by reacting a phosphine (i.e., a compound of the formula PR⁶R⁷R⁸) with an alkyl or aryl halide of the formula R⁹X in accordance with known methods and procedures.

The alkali metal halide salt formed as a result of cation exchange can be filtered prior to use of the initiator in polymerization, but filtration is not necessary for polymerization to be successful.

Dianions are also appropriate initiators. Such initiators can be prepared from, for example, a diamine, a diol or dithiol, which is then metathesized with a tetrasubstituted phosphonium halide to provide an initiator of the formula:

(PR⁶R⁷R⁸R⁹)⁺]₂ (R¹⁰NR^{11'}NR¹⁰)²⁻

(PR⁶R⁷R⁸R⁹)⁺]₂ (OR^{12'}O)²⁻

or

[(PR⁶R⁷R⁸R⁹)⁺]₂ (SR¹³'S)²⁻

where R⁶, R⁷, R⁸, R⁹ and R¹⁰ as defined above, and R^{11'}, R^{12'} and R^{13'} are divalent forms of the monovalent groups described above for R¹¹, R¹² and R¹³. Such initiators can be used in the process of the present invention to make a block copolymer having, for example, a first, central poly(meth)acrylate or polyacrylonitrile block, and second, distinct poly(meth)acrylate or polyacrylonitrile blocks at the ends of the first, central block.

The present invention is thus also concerned with block copolymers of the formula:

B-A-(R¹⁰NR^{11'}NR¹⁰)-A-B

B-A-(OR^{12'}O)-A-B

B-A-(SR^{13'}S)-A-B

C-B-A-(R¹⁰NR^{11'}NR¹⁰)-A-B-C

C-B-A-(OR^{12'}O)-A-B-C

C-B-A-(SR^{13'}S)-A-B-C

etc. (i.e., with successive blocks attached to each end), where A, B and C are distinct (co)polymer blocks produced by anionic polymerization of one or more monomers of the formula: 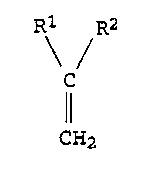 where R¹ and R² are as defined above, using at least one of the present phosphonium salts of nitrogen-, oxygen- and sulfur-based anions.

Branch(co)polymers having three or more chains can be prepared from, for example, appropriate phosphonium salts of compounds having three or more nitrogen, oxygen and sulfur anions (so-called "multi-anionic" initiators), such as tris-, tetra-, penta-or hexa(hydroxymethyl)benzene, glycerol, erythritol, diethylene triamine, triethylene tetraamine, dithioerythritol, dithiothreitol, trihydroxycyclohexane or pentose or hexose sugars (which may contain one or more protecting groups, such as tri-C₁-C₄-alkyl-silyl, acyl [e.g., C₁-C₆ alkylcarbonyl], triphenylmethyl, etc.). Thus, general initiators of the formulas

[(PR⁶R⁷R⁸R⁹)⁺]ₓ R^{11"}-(-N-R¹⁰)ₓ

[(PR⁶R⁷R⁸R⁹)⁺]ₓ R^{12"}-(-O-)ₓ

or

[(PR⁶R⁷R⁸R⁹)⁺]ₓ R^{13"}-(-S⁻)ₓ

can be used in the present method, where x can be at least one, preferably from 1 to 6. A preferred initiator is one in which x is 2, R^{11"} is R^{11'}, R^{12"} is R^{12'} and R^{13"} is R^{13'}, but the most preferred initiator is one in which x is 1, R^{11"} is R¹¹, R^{12"} is R¹² and R^{13"} is R¹³.

Triblock copolymers can be prepared from dianionic initiators described above by reacting the dianionic initiator with a first monomer to prepare a "living" anionic first block, followed by reacting the "living" anionic first block with a second monomer to provide terminal blocks on each end of the "living" first block. Thus, the present invention also concerns a method for preparing a triblock copolymer, comprising:
reacting a first monomer of the formula: 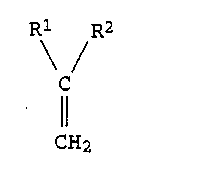 with an initiator of the formula

   [(PR⁶R⁷R⁸R⁹)⁺]₂ (R¹⁰NR^{11'}NR¹⁰)²⁻

   [(PR⁶R⁷R⁸R⁹)⁺]₂ (OR^{12'}O)²⁻

   or

   [(PR⁶R⁷R⁸R⁹)⁺]₂ (SR^{13'}S)²⁻

   at a temperature of from -78°C to 40°C, in a solvent in which the initiator at least partially dissolves and which does not quench the reaction, for a length of time sufficient to polymerize the first monomer, wherein:
   R¹ is selected from the group consisting of H, CN, alkyl of from 1 to 6 carbon atoms (which may be halogenated as described above) and aryl,
   R² is independently selected from the group consisting of CN, C(=X)R³, C(=X)NR⁴R⁵ and heterocyclic rings capable of stabilizing an α-anion, where X is NR (R is C₁-C₂₀ alkyl), O or S, R³ is alkyl of from 1 to 20 Carbon atoms, alkoxy of from 1 to 20 Carbon atoms or alkylthio of from 1 to 20 Carbon atoms, and R⁴ and R⁵ are independently alkyl of from 1 to 20 Carbon atoms or are joined together to form an alkylene group of from 2 to 5 carbon atoms, thus forming a 3- to 6-membered ring;
   R⁶, R⁷, R⁸ and R⁹ are independently alkyl of from 1 to 20 Carbon atoms, aryl or aralkyl (wherein any pair of R⁶, R⁷, R⁸ and R⁹ may be joined to form a ring, including the possibility that both pairs of R⁶⁻R⁹ may be joined to form a ring [preferably a 3- to 8-membered ring]), and
   R¹⁰ and R¹¹ are independently alkyl of from 1 to 20°Carbon atoms, cycloalkyl of from 3 to 10 Carbon atoms, an aryl group, a trialkylsilyl group or an electronegative group, or R¹⁰ and R¹¹ may be joined together to form a heterocycle,
   R¹² is H, alkyl of from 1 to 20 Carbon atoms or cycloalkyl of from 3 to 10 Carbon atoms which may contain one or more remote sites of unsaturation, aryl or a (co)polymer radical, and
   R¹³ is R¹², straight-chain or branched alkenyl of from 2 to 20 Carbon atoms, or straight-chain or branched alkynyl of from 2 to 20 Carbon atoms;
   adding a second monomer of the formula: 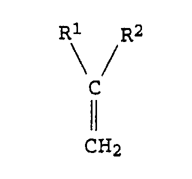 where R¹ and R² are as defined above, the second monomer being distinct from the first monomer, at a temperature of from -78°C to 40°C, and reacting for a length of time sufficient to form a triblock (co)polymer intermediate,
   quenching the triblock (co)polymer intermediate with an acyl halide, an acid anhydride or a substance containing an active hydrogen atom to form a triblock (co)polymer; and
   isolating the formed triblock (co)polymer.

Successive blocks can be added to each end of the "living" anionic chain by successively adding different monomers or by changing reaction conditions appropriately (e.g., lowering the reaction temperature to increase or otherwise alter stereoregularity) after the first "adding" step above, but prior to quenching.

Polymeric anions can be used for living polymerization of a polymer, or for preparation of a block copolymer. For example, an organometal reagent-initiated (e.g., a C₁-C₄-alkyllithium-initiated) polymerization of an anionically polymerizable monomer (e.g., styrene) can be conducted in accordance with known methods to provide a "living" polymeric anion. Suitable monomers for preparation of such a "living" (co)polymeric anion include styrene, α-methylstyrene, styrene or α-methylstyrene having 1 to 5 (preferably 1 to 3, most preferably 1) C₁-C₄-alkyl and/or C₁-C₄-alkoxy substituents on the phenyl ring, butadiene, isoprene, dimethylbutadiene, or mixtures thereof. Such a "living" polymeric anion can be reacted with, for example, an aziridine, an epoxide or an episulfide to form a (co)polymeric initiator of the formula:

(co)polymer- (CR¹⁹R²⁰CR²¹R²²NR²³)- (PR⁶R⁷R⁸R⁹)⁺

(co)polymer-(CR¹⁹R²⁰CR²¹R²²O)- (PR⁶R⁷R⁸R⁹)⁺

(co)polymer- (CR¹⁹R²⁰CR²¹R²²S) - (PR⁶R⁷R⁸R⁹)⁺

where R²³ is acyl (preferably alkylcarbonyl, cycloalkylcarbonyl, arylcarbonyl or aralkylcarbonyl, where the alkyl, cycloalkyl, aryl and aralkyl moieties of the alkylcarbonyl, cycloalkylcarbonyl, arylcarbonyl and aralkylcarbonyl groups are as defined above), and R¹⁹, R²⁰, R²¹ and R²² are independently selected from the group consisting of H, straight-chain or branched alkyl of from 1 to 20 Carbon atoms, straight-chain or branched alkyl of from 1 to 20 Carbon atoms substituted with from 1 to (2n+1) halogen atoms (where n is the number of carbon atoms in the alkyl group), cycloalkyl of from 3 to 10 Carbon atoms, straight-chain or branched alkenyl of from 2 to 20 Carbon atoms, straight-chain or branched alkenyl of from 2 to 20 Carbon atoms substituted with from 1 to (2n-1) halogen atoms (where n is the number of carbon atoms in the alkenyl group), straight-chain or branched alkynyl of from 2 to 20 Carbon atoms, straight-chain or branched alkynyl of from 2 to 20 Carbon atoms substituted with from 1 to (2n-3) halogen atoms (where n is the number of carbon atoms in the alkynyl group), aryl, aralkyl, heterocyclyl, halogen, and cyano. Preferably, R¹⁹ and R²⁰ are H, and R²¹ and R²² are independently selected from the group consisting of H, straight-chain or branched alkyl of from 1 to 10 Carbon atoms (which may be substituted with from 1 to (2n+1) halogen atoms, where n is the number of carbon atoms in the alkyl group), cycloalkyl of from 3 to 6 carbon atoms, straight-chain or branched alkenyl of from 2 to 6 carbon atoms (which may be substituted with from 1 to (2n-1) halogen atoms, where n is the number of carbon atoms in the alkenyl qroup), phenyl, or phenyl having from 1 to 3 substituents selected from the group consisting of alkyl of from 1 to 6 carbon atoms, alkoxy of from 1 to 4 carbon atoms, phenyl and halogen. Further, any two of R¹⁹, R²⁰, R²¹ and R²² may be joined to form an alkylenyl group of from 1 to 6 carbon atoms and thus form a cycloalkylenyl ring of from 3 to 8 members.

The (co)polymeric initiator is then used to initiate the polymerization of the next anionically polymerizable comonomer (preferably of the formula R¹R²C=CH₂, described above). This initiator can be used in the process of the present invention to make a block copolymer having, for example, a first polystyrene block and a second poly(meth)acrylate or polyacrylonitrile block.

Thus, the present invention also encompasses a method for preparing a block (co)polymer, comprising the steps of:
anionically polymerizing one or more first monomers to form a (co)polymer anion;
reacting the (co)polymer anion with a compound of the formula 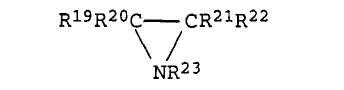 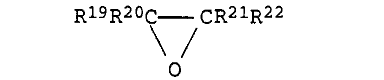 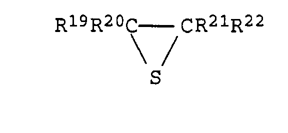 where R²³ is acyl (as defined above), and R¹⁹, R²⁰, R²¹ and R²² are as defined above to form a (co)polymer-amide, (co)polymer-oxide or (co)polymer-sulfide anion;
metathesizing the (co)polymer-amide, (co)polymer-oxide or (co)polymer-sulfide anion with a phosphonium salt of the formula:

   (PR⁶R⁷R⁸R⁹)⁺ X⁻

   where X is an inorganic anion (preferably selected from the group consisting of a halide, nitrate, nitrite, borate, tetraphenyl borate [Ph₄B⁻], tosylate [p-H₃CC₆H₄SO₃⁻], one-half equivalent of sulfite [or "(SO₃)_{0.5}"], trifluoromethanesul-fonate, one-half equivalent of sulfate [or "(SO₄)_{0.5}"], one-third equivalent of phosphate [or "(PO₄)_{0.33}"] and one-half equivalent of carbonate [or "(CO₃)_{0.5}"], and R⁶, R⁷, R⁸ and R⁹ are as defined above (and wherein any pair of R⁶, R⁷, R⁸ and R⁹ may be joined to form a ring, including the possibility that both pairs of R⁶⁻R⁹ may be joined to form a ring [preferably a 3- to 8- membered ring]), to provide an initiator;
reacting the initiator with one or more monomers of the formula: 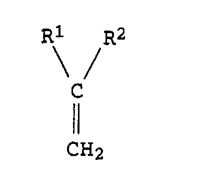 at a temperature of from -78°C to 40°C, in a solvent in which the initiator at least partially dissolves and which does not quench the reaction, for a length of time sufficient to polymerize the first monomer, wherein R¹ and R² are as defined above, to form a reaction mixture;
quenching the reaction mixture with an acyl halide, an acid anhydride or a substance containing an active hydrogen atom to form a block (co)polymer; and
isolating the formed block (co)polymer.

The present invention is thus also concerned with block copolymers of the formula:

(co)polymer-(CR¹⁹R²⁰CR²¹R²²NR²³)-A

(co)polymer-(CR¹⁹R²⁰CR²¹R²²O)-A

(co)polymer- (CR¹⁹R²⁰CR²¹R²²S)-A

where the (co)polymer is one produced by anionic polymerization (preferably of styrene, α-methylstyrene, styrene or α-methylstyrene having 1 to 5 C₁-C₄-alkyl and/or C₁-C₄-alkoxy substituents on the phenyl ring, butadiene, isoprene, dimethylbutadiene, or mixtures thereof), R¹⁹, R²⁰, R²¹, R²² and R²³ are as defined above, and A is one or more distinct (co)polymer blocks of one or more monomers of the formula: 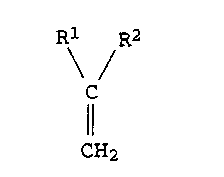 where R¹ and R² are as defined above.

The weight or number average molecular weight of a block in the present block (co)polymers may range from 300 to 500,000 g/mol, more preferably 500 to 300,000 g/mol, and most preferably 1,000 to 100,000 g/mol. Similar to the monodisperse (co)polymer described above, the weight or number average molecular weight of block B in the present triblock copolymer may range from 500 g/ mol to 300,000 g/mol, preferably from 1,000 to 200,000 g/mol, and more preferably from 2,000 to 60,000 g/mol. The present block copolymers are also preferably "monodisperse" in that they may have a M_{w}/Mₙ value of ≤ 2.0, preferably ≤ 1.5, and most preferably ≤ 1.1. Successive blocks may also be of the same monomer, but have a different tacticity.

In a further embodiment, a triblock copolymer may be prepared from the dimeric dianion of an aromatic vinyl monomer such as styrene or α-methylstyrene, prepared, for example, by reacting the aromatic vinyl monomer with sodium or lithium naphthalide (in a known manner). The dimeric dianion of the aromatic vinyl monomer may be subsequently reacted with a monomer selected from the group consisting of styrene, α-methylstyrene, styrene or α-methylstyrene having 1 to 5 C₁-C₄-alkyl and/or C₁-C₄-alkoxy substituents on the phenyl ring, butadiene, isoprene, dimethylbutadiene and mixtures thereof to prepare a dianion of a first polymer block. The first polymer block dianion can then be reacted with an aziridine, an epoxide or an episulfide in accordance with the above-described method, and the remaining steps of the method (metathesizing with a phosphonium salt, reacting with one or more monomers of the formula CH₂=CR¹R², quenching and isolating) can then be conducted to prepare a triblock copolymer in which the inner block is a (co)polymer of styrene, α-methylstyrene, styrene or α-methylstyrene having 1 to 5 C₁-C₄-alkyl and/or C₁-C₄-alkoxy substituents on the phenyl ring, butadiene, isoprene, dimethylbutadiene or a mixture thereof, and the outer blocks are of one or more monomers of the formula CH₂=CR¹R².

Suitable solvents for the reacting or polymerizing step of the present method (in any of its various embodiments) include ethers, cyclic ethers, aromatic hydrocarbon solvents, and mixtures thereof. Suitable ethers include compounds of the formula R²⁴OR²⁵, in which each of R²⁴ and R²⁵ is independently an alkyl group of from 1 to 6 carbon atoms which may be further substituted with a C₁-C₄-alkoxy group. Preferably, when one of R²⁴ and R²⁵ is methyl, the other of R²⁴ and R²⁵ is alkyl of from 4 to 6 carbon atoms or C₁-C₄-alkoxyethyl. Examples include diethyl ether, ethyl propyl ether, dipropyl ether, methyl t-butyl ether, di-t-butyl ether, glyme (dimethoxyethane), diglyme (diethylene glycol, dimethyl ether), etc.

Suitable cyclic ethers include THF and dioxane. Suitable aromatic hydrocarbon solvents include benzene, toluene, o-xylene, m-xylene, p-xylene and any isomer or mixture of isomers of cumene.

The initiator should be at least partially soluble in the solvent. Thus, when using an aromatic solvent, the reaction may be advantageously promoted by increasing the lipophilicity of the initiator (e.g., having a C₆-C₂₀-alkyl substituent in one or both of the ionic components [preferably at least in the phosphonium cation]). For example, if the initiator has the formula Ar₄P⁺ Ar'₂N⁻ or Ar₄P⁺ Ar'O⁻, where each Ar and Ar' are independently an aryl group, one or more of the Ar and Ar' groups should include one or more alkyl substituents having from 1 to 20 Carbon atoms, preferably having from 4 to 20 Carbon atoms and more preferably having from 6 to 20 Carbon atoms. To avoid molecular weight distribution broadening, the polymer should also be soluble in the solvent selected.

The polymerization may be conducted by dropwise addition of a solution of monomer (e.g., 0.01-5.0 M, preferably 0.1-2.0 M and most preferably about 1.0 M in THF) into a solution of initiator in THF (e.g., from 10⁻⁵ to 10⁻¹, preferably from 10⁻⁴ to 10⁻² and most preferably about 1-2 x 10⁻³ molar equivalents with respect to moles of monomer).

Although the present reaction may be conducted at a temperature of from -78°C to 40°C, the preferred range is from -20°C to 300C, more preferably from 0°C to 25°C, and most preferably from 15°C to 25°C.

The organic phosphonium cation is believed to facilitate the formation of narrow MWD (co)polymers at ambient temperature by reducing the rate of termination (e.g., by intramolecular Claisen condensation reaction), relative to the rate of propagation.

It is further believed that there exists an equilibrium between a dormant species [phosphorous ylid, probably present in an amount of more than 55% of all species) and a polymerization active species (phosphonium enolate, probably present in an amount of less than 5% of all species) such as is indicated in the scheme below: 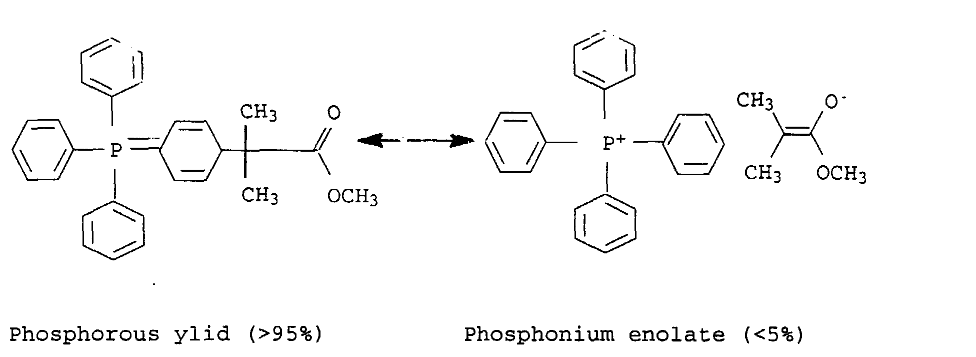 Termination of the polymerization using an appropriate quenching reagent rapidly gives a light yellow solution. Suitable quenching reagents in the present process include acyl halides, acid anhydrides and substances containing an active hydrogen atom.

Suitable acyl halides include halides, preferably chlorides, of organic acids, including carboxylic acids, sulfonic acids, phosphonic acids, etc. Such acids are suitably of the formula R²⁶COX, R²⁶SO₂X and R²⁶P(=O)(OR²⁷)X, in which R²⁶ is alkyl of from 1 to 20 Carbon atoms in which each of the hydrogen atoms may be independently replaced by a halide (preferably a fluoride or a chloride), alkenyl of from 2 to 20 Carbon atoms, alkynyl of from 1 to 10 Carbon atoms, phenyl which may be substituted with from 1 to 5 halogen atoms or alkyl groups of from 1 to 4 carbon atoms, or aralkyl in which the aryl group is phenyl or substituted phenyl and the alkyl group is from 1 to 6 carbon atoms; X is a fluorine, chlorine, bromine or iodine atom; and R²⁷ is alkyl of from 1 to 4 carbon atoms. Preferred acyl halides include benzenesulfonyl chloride, toluenesulfonyl chloride and those of the formula R²⁸COX, in which R²⁸ is alkyl of from 1 to 4 carbon atoms, vinyl, 2-propenyl or phenyl, and X is chlorine (e.g., acetyl chloride, propionyl chloride, (meth)acryloyl chloride and benzoyl chloride). The most preferred acyl halide is methacryloyl chloride.

Suitable acid anhydrides include those of the formula (R²⁸CO)₂O, where R²⁸ is as defined above. Preferred acid anhydrides include acetic anhydride, propionic anhydride, and (meth)acrylic anhydride.

Active hydrogen atom-containing substances include those substances in which a hydrogen atom is attached to a heteroatom, and which have a pKₐ less than the protonated nitrogen, oxygen or sulfur anion of the initiator. Such compounds include water, alcohols of from 1 to 6 carbon atoms, aqueous solutions of ammonium salts (e.g., ammonium halide or ammonium carbonates), carboxylic and mineral acids (e.g., acetic acid, hydrochloric acid, etc.) or an aqueous solution thereof, etc., with methanol being the most preferred quenching agent.

In some cases, up to 10 equivalents of alcohol or water may be necessary to quench the polymerization. Thus, it is believed that small quantities of protic solvents may be tolerated in the present method. As a consequence, it may not be necessary to rigorously purify and dry all starting materials prior to use.

The present isolating step is conducted in accordance with known procedures and methods, such as precipitating the (co)polymer and filtering the precipitated (co)polymer. Precipitation can be conducted using a suitable C₅-C₈-alkane or cycloalkane solvent, such as hexane, heptane, cyclohexane, pentane, mineral spirits, or a C₁-C₆-alcohol, such as methanol, ethanol or isopropanol, or any mixture of suitable solvents. Preferably, the solvent for precipitating is hexane, mixtures of hexanes, or methanol.

The precipitated (co)polymer can be filtered by gravity or by vacuum filtration, in accordance with known methods (e.g., using a Büchner funnel and an aspirator). The polymer can then be washed with the solvent used to precipitate the polymer, if desired. The steps of precipitating, filtering and washing may be repeated, as desired.

Once isolated, the (co)polymer may be dried by drawing air through the (co)polymer, by vacuum, etc., in accordance with known methods (preferably by vacuum). The present (co)polymer may be analyzed and/or characterized by size exclusion chromatography, in accordance with known procedures.

The syndiotactic content of PMMA prepared by the present process at 25°C is moderately high. The syndiotacticity can be increased by conducting the reaction at a lower temperature.

Control of molecular weight is possible, and is optimal when polymerization is performed immediately after the formation of the phosphonium-containing initiator. The optimum control of molecular weight is best provided using a Flow Tube Reactor (Gerner, F., Höcker, H., Muller, A., Schulz, G. *Eur. Polym. J.* **1984,** *20,* 349). However, molecular weight control can be somewhat empirically derived for a given initiator and initiator-to-monomer ratio.

A continuous flow reactor system (such as those conventional continuous flow reactors known in the art) will also help to overcome potential problems with bulk polymerization, which may include, for example, generation of an appreciable amount of heat. In a continuous flow system, the heat of reaction may be dissipated more efficiently than in a bulk system, where some contents of the reaction mixture may be relatively far removed from a heat-exchange surface.

The polymers produced by the present method are "monodisperse"; that is, the polymers have a narrow molecular weight distribution. In its broadest sense, a "monodisperse" polymer has a ratio of weight average molecular weight to number average molecular weight (M_{w}/Mₙ) of 2.0 or less, more preferably of 1.5 or less, and most preferably of 1.1 or less.

The number average molecular weight of polymer produced by the present method depends linearly on the conversion.

A particularly suitable initiator for use in the present invention is the phosphonium salt of isobutyl alcohol (2-methyl-1-propanol). The advantage of this initiator is that it has approximately the same structure of the monomer units of the corresponding methacrylate polymer.

Having generally described this invention, a further understanding can be obtained by reference to certain specific examples which are provided herein for purposes of illustration only and are not intended to be limiting unless otherwise specified.

### EXAMPLE

### Reagents and solvents

The work was carried out in a glove box under nitrogen.

THF was titrated with tritylpotassium/THF solution to a persistent red color and then recondensed under reduced pressure.

Triphenylmethane was dried for 8h under reduced pressure and then admixed in THF with Na-K alloy. After 4h stirring, the remaining metal was filtered off and the concentration of Ph₃CK/THF solution was determined by titration of acetanilide as 0.146 mol/1.

9-Ethylfluorene was predried over alumina beads, diluted with THF and reacted with nBuLi or with potassium to form 9-EFluK or 9-EFLi.

The methyl methacrylate was purified by introduction of nitrogen and storage over alumina, followed by stirring over CaH₂ and subsequent recondensation under reduced pressure.

The Ph₄PCl was first dried for about 8h at about 100°C in a high vacuum. The Ph₄PCl thus predried was then slurried up in the THF and titrated with tritylpotassium/THF solution at -15 C to a red color. The white Ph4PCl was then filtered off and subsequently dried under reduced pressure.

### Polymerization

The initiator was prepared *in situ* by adding the solution of (iPr)₂N⁻Li⁺ in THF to a suspension of an excess of Ph₄PCl in 30 ml of THF. After 10 min. stirring at -15°C, about 0.8 ml of MMA (about 2.7% by volume of monomer) was added to the deep-red initiator solution. The temperature rose to about -8°C within a few seconds, only to return back to the bath temperature within a few minutes. The polymerization was stopped with methanol/acetic acid, and the deep-red color disappeared. The polymer was precipitated with methanol or petroleum ether, filtered off and dried under reduced pressure. The GPC measurements were carried out in relation to PMMA standards.

The following results were obtained:

| | |
|---|---|
| Mₙ theoretical | 3400 g/mol |
| Mₙ GPC | 5800 g/mol |
| M_{g}/Mₙ | 1.48 |
| Tacticity triads | 66% |

## Claims

1. A method for producing a (co)polymer, which comprises:
reacting an anionically polymerizable monomer of the formula: 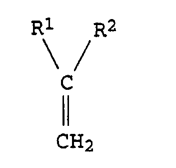 with an initiator of the formula
(PR⁶R⁷R⁸R⁹)⁺ (R¹⁰R¹¹N)-
(PR⁶R⁷R⁸R⁹)⁺ (R¹²O)-
or
(PR⁶R⁷R⁸R⁹)+ (R¹³S)-
at a temperature of from -78°C to 40°C, in a solvent in which the initiator at least partially dissolves and which does not quench the reaction, for a length of time sufficient to polymerize the monomer(s) and form a reaction mixture, wherein:
R¹ is selected from the group consisting of H, CN, straight-chain or branched alkyl of from 1 to 6 carbon atoms which may be substituted with from 1 to (2n+1) halogen atoms, straight-chain or branched alkenyl of from 2 to 6 carbon atoms which may be substituted with from 1 to (2n-1) halogen atoms, straight-chain or branched alkynyl of from 2 to 6 carbon atoms which may be substituted with from 1 to (2n-3) halogen atoms, and aryl, where n is the number of carbon atoms in the alkyl, alkenyl or alkynyl group; and
R² is independently selected from the group consisting of CN, C(=X)R³, C(=X)NR⁴R⁵ and heterocyclic rings capable of stabilizing an α-anion, where X is NR, O or S, R being C₁-C₂₀ alkyl; R³ is alkyl of from 1 to 20 carbon atoms, alkoxy of from 1 to 20 carbon atoms or alkylthio of from 1 to 20 carbon atoms; and R⁴ and R⁵ are independently alkyl of from 1 to 20 carbon atoms or are joined together to form an alkylene group of from 2 to 5 carbon atoms, thus forming a 3- to 6-membered ring;
R⁶, R⁷, R⁸ and R⁹ are independently alkyl of from 1 to 20 carbon atoms, aryl or aralkyl, and any pair of R⁶, R⁷, R⁸ and
R⁹ may be joined to form a ring, including the possibility that both pairs of R⁶⁻R⁹ may be joined to form a ring,
R¹⁰ and R¹¹ are independently alkyl of from 1 to 20 carbon atoms, cycloalkyl of from 3 to 10 carbon atoms, an aryl group, a trialkylsilyl group or an electronegative group, or R¹⁰ and R¹¹ may be joined together to form a heterocycle, and
R¹² is independently H, straight-chain or branched alkyl of from 1 to 20 carbon atoms or cycloalkyl of from 3 to 10 carbon atoms, straight-chain or branched alkenyl of from 2 to 20 carbon atoms, straight-chain or branched alkynyl of from 2 to 20 carbon atoms, aryl, aralkyl or a (co)polymer radical;
R¹³ is independently R¹², straight-chain or branched alkenyl of from 2 to 20 carbon atoms, or straight-chain or branched alkynyl of from 2 to 20 carbon atoms;
quenching the reaction mixture with an acyl halide, an acid anhydride or a substance containing an active hydrogen atom to form a (co)polymer; and
isolating the formed (co)polymer.

2. The method of Claim 1, wherein said formed (co)polymer has a weight average or number average molecular weight of from 500 g/mol to 300,000 g/mol.

3. The method of Claim 1, wherein said formed (co)polymer has a weight average molecular weight (M_{w})/number average molecular weight (Mₙ) ratio of 2.0 or less.

4. The method of Claim 1, wherein said anionically polymerizable monomer is selected from the group consisting of (meth)acrylate esters of C₁-C₂₀ alcohols, acrylonitrile, cyanoacrylate esters of C₁-C₂₀ alcohols, didehydromalonate esters of C₁-C₆ alcohols, vinyl pyridines, vinyl N-alkylpyrroles, vinyl oxazoles, vinyl thiazoles, vinyl pyrimidines and vinyl imidazoles, vinyl C₁-C₁₄-alkyl ketones in which the α-carbon atom of the alkyl group does not bear a hydrogen atom, vinyl aryl ketones and styrenes bearing electron-donating and electron-withdrawing groups on the phenyl ring.

5. The method of Claim 1, wherein R⁶, R⁷, R⁸ and R⁹ are independently phenyl, naphthyl, phenyl having from 1 to 5 substituents or naphthyl having from 1 to 7 substituents, the substituents being independently selected from the group consisting of alkyl of from 1 to 6 carbon atoms, alkoxy of from 1 to 6 carbon atoms, alkylthio of from 1 to 6 carbon atoms and NR¹⁴R¹⁵, in which R¹⁴ and R¹⁵ are independently alkyl of from 1 to 6 carbon atoms.

6. The method of Claim 1, wherein:
one of R¹⁰ and R¹¹ is selected from the group consisting of straight-chain or branched alkyl of from 1 to 6 carbon atoms, trimethylsilyl, dimethyl-t-butylsilyl, dimethyl-t-hexylsilyl, phenyl or phenyl having from 1 to 3 substituents selected from the group consisting of alkyl of from 1 to 6 carbon atoms, alkoxy of from 1 to 4 carbon atoms, phenyl and halogen, and
the remaining one of R¹⁰ and R¹¹ is selected from the group consisting of -C(O)OR, -C(O)H, -C(O)N(R)₂, -C(O)SR, -CN, -S(O)R, -SO₂R, -SO₃R, -NO₂, -P(O)(OR)₂, -P(O)(R)₂, -P(O)(OR)(R), -P(O)(OR'O), -P(O)(NR₂)(R), -P(O) (NR₂)₂ and - P(O)([NR]R'[NR]), where R is (independently if more than one R group is present) C₁-C₆ alkyl, benzyl or phenyl, and R' is C₂-C₄ alkylene or 1,2-phenylene.

7. The method of Claim 1, wherein R¹³ is a group of the formula -CR¹⁶=CR¹⁷R¹⁸, where R¹⁶, R¹⁷ and R¹⁸ independently are H, alkyl, aryl, alkoxy or phenoxy, and more preferably, H, alkyl of from 1 to 6 carbon atoms, phenyl, or phenyl having from 1 to 3 substituents selected from the group consisting of alkyl of from 1 to 6 carbon atoms, alkoxy of from 1 to 4 carbon atoms, phenyl and halogen.

8. The method of Claim 1, wherein R¹⁰ and R¹¹ are joined together to form a heterocyclic ring selected from the group consisting of: 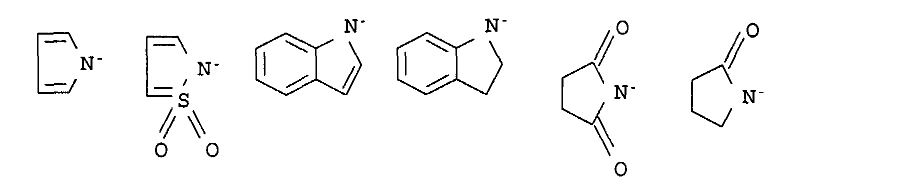 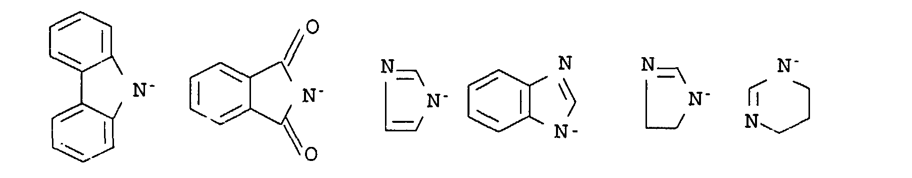 which may have one or more alkyl, phenyl, vinyl, halogen, nitro or cyano substituents, which may be attached in each case to one or more of the different carbon atoms of the heterocyclic ring.

9. A block copolymer of the formula:
R^{11"}(NR¹⁰-A-B)ₓ
R^{12"}(O-A-B)ₓ
R^{13"}(S-A-B)ₓ
where
A is a (co)polymer block produced by anionic polymerization of one or more monomers of the formula: 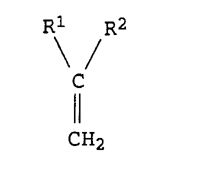 wherein R¹ is selected from the group consisting of H, CN, straight-chain or branched alkyl of from 1 to 6 carbon atoms which may be substituted with from 1 to (2n+1) halogen atoms, straight-chain or branched alkenyl of from 2 to 6 carbon atoms which may be substituted with from 1 to (2n-1) halogen atoms, straight-chain or branched alkynyl of from 2 to 6 carbon atoms which may be substituted with from 1 to (2n-3) halogen atoms, and aryl, where n is the number of carbon atoms in the alkyl, alkenyl or alkynyl group; and
R² is independently selected from the group consisting of CN, C(=X) R³, C(=X)NR⁴R⁵ and heterocyclic rings capable of stabilizing an α-anion, where X is NR, O or S, R being C₁-C₂₀ alkyl; R³ is alkyl of from 1 to 20 carbon atoms, alkoxy of from 1 to 20 carbon atoms or alkylthio of from 1 to 20 carbon atoms; and R⁴ and R⁵ are independently alkyl of from 1 to 20 carbon atoms or are joined together to form an alkylene group of from 2 to 5 carbon atoms, thus forming a 3- to 6-membered ring;
B comprises one or more distinct (co)polymer blocks produced by anionic polymerization of one or more monomers of the formula: 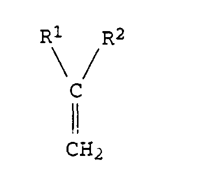 wherein R¹ and R² are as defined above;
R¹⁰ is alkyl of from 1 to 20 carbon atoms, an aryl group, a trialkylsilyl group or an electronegative group; and
R^{11"}, R^{12"} and R^{13"} are independently a mono- or multi-valent alkyl, cycloalkyl, aryl or aralkyl radical, in which the valency is equal to x, and which may be substituted with one or more alkyl, cycloalkyl, halogen, phenyl, nitro or electron-withdrawing groups; and
x is at least one.

10. The block copolymer of Claim 9, wherein said formula is selected from the group consisting of
B-A-(R¹⁰NR^{11'}NR¹⁰)-A-B
B-A-(OR^{12'}O)-A-B
and
B-A-(SR^{13'}S)-A-B
where R^{11'}, R^{12'} and R^{13'} are independently a divalent alkylenyl, cycloalkylenyl, arylenyl or aralkylenyl radical, which may be substituted with one or more alkyl, cycloalkyl, halogen, phenyl, nitro or electron-withdrawing groups.

11. A method for preparing a branch copolymer, comprising:
reacting at least one anionically polymerizable monomer of the formula: 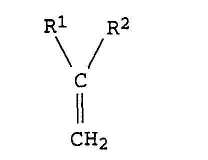 with an initiator of the formula
[(PR⁶R⁷R⁸R⁹)⁺]ₓ R^{11"}-(-N⁻R¹⁰)ₓ
[(PR⁶R⁷R⁸R⁹)⁺]ₓ R^{12"}-(-O⁻)ₓ
or
[(PR⁶R⁷R⁸R⁹)⁺]ₓ R^{13"}-(-S⁻)ₓ
at a temperature of from -78°C to 40°C, in a solvent in which the initiator at least partially dissolves and which does not quench the reaction, for a length ot time sufficient to polymerize the first monomer, wherein:
R¹ is selected from the group consisting of H, CN, alkyl of from 1 to 6 carbon atoms (which may be halogenated as described above) and aryl,
R² is independently selected from the group consisting of CN, C(=X) R³, C(=X)NR⁴R⁵ and heterocyclic rings capable of stabilizing an α-anion, where X is NR (R is C₁-C₂₀ alkyl), O or S, R³ is alkyl of from 1 to 20 carbon atoms, alkoxy of from 1 to 20 carbon atoms or alkylthio of from 1 to 20 carbon atoms, and R⁴ and R⁵ are independently alkyl of from 1 to 20 carbon atoms or are joined together to form an alkylene group of from 2 to 5 carbon atoms, thus forming a 3- to 6-membered ring;
R⁶, R⁷, R⁸ and R⁹ are independently alkyl of from 1 to 20 carbon atoms, aryl or aralkyl (wherein any pair of R⁶, R⁷, R⁸ and R⁹ may be joined to form a ring, including the possibility that both pairs of R⁶⁻R⁹ may be joined to form a ring),
R¹⁰ is alkyl of from 1 to 20 carbon atoms, cycloalkyl of from 3 to 10 carbon atoms, an aryl group, a trialkylsilyl group or an electronegative group,
R^{11"}, R^{12"} and R^{13"} are independently a mono- or multi-valent alkyl, cycloalkyl, aryl or aralkyl radical, in which the valency is equal to x, and which may be substituted with one or more alkyl, cycloalkyl, halogen, phenyl, nitro or electron-withdrawing groups, or
R¹⁰ and R^{11"} may be joined together to form a heterocycle, and
x is at least 3,
to form a branch (co)polymer intermediate; quenching the branch (co)polymer intermediate with an acyl halide, an acid anhydride or a substance containing an active hydrogen atom to form a branch (co)polymer; and
isolating the formed branch (co)polymer.

12. A method for preparing a triblock copolymer, comprising:
reacting at least one anionically polymerizable monomer of the formula: 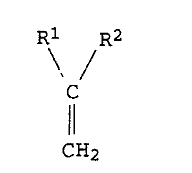 with an initiator of the formula
(PR⁶R⁷R⁸R⁹)⁺]₂ (R¹⁰NR^{11'}NR¹⁰)²⁻
[(PR⁶R⁷R⁸R⁹)⁺]₂ (OR^{12'}O)²⁻
or
[(PR⁶R⁷R⁸R⁹)⁺]₂ (SR^{13'}S)²⁻
at a temperature of from -78°C to 40°C, in a solvent in which the initiator at least partially dissolves and which does not quench the reaction, for a length of time sufficient to polymerize the first monomer, wherein:
R¹ is selected from the group consisting of H, CN, straight-chain or branched alkyl of from 1 to 6 carbon atoms which may be substituted with from 1 to (2n+1) halogen atoms, straight-chain or branched alkenyl of from 2 to 6 carbon atoms which may be substituted with from 1 to (2n-1) halogen atoms, straight-chain or branched alkynyl of from 2 to 6 carbon atoms which may be substituted with from 1 to (2n-3) halogen atoms, and aryl, where n is the number of carbon atoms in the alkyl, alkenyl or alkynyl group;
R² is independently selected from the group consisting of CN, C(=X) R³, C(=X)NR⁴R⁵ and heterocyclic rings capable of stabilizing an α-anion, where X is NR (R is C₁-C₂₀ alkyl), O or S, R³ is alkyl of from 1 to 20 carbon atoms, alkoxy of from 1 to 20 carbon atoms or alkylthio of from 1 to 20 carbon atoms, and R⁴ and R⁵ are independently alkyl of from 1 to 20 carbon atoms or are joined together to form an alkylene group of from 2 to 5 carbon atoms, thus forming a 3- to 6-membered ring;
R⁶, R⁷, R⁸ and R⁹ are independently alkyl of from 1 to 20 carbon atoms aryl or aralkyl (wherein any pair of R⁶, R⁷, R⁸ and R⁹ may be joined to form a ring, including the possibility that both pairs of R⁶⁻R⁹ may be joined to form a ring),
R¹⁰ is alkyl of from 1 to 20 carbon atoms, cycloalkyl of from 3 to 10 carbon atoms, an aryl group, a trialkylsilyl group or an electronegative group.
R^{11'}, R^{12'} and R^{13'} are independently a divalent alkylenyl, cycloalkylenyl, arylenyl or aralkylenyl radical, which may be substituted with one or more alkyl, cycloalkyl, halogen, phenyl, nitro or electron-withdrawing groups, or
R¹⁰ and R¹¹' may be joined together to form a heterocycle;
adding a second monomer of the formula: 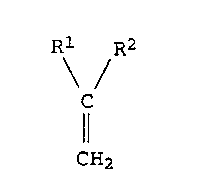 where R¹ and R² are as defined above at a temperature of from -78°C to 40°C, and reacting for a length of time sufficient to form a (co)polymer block distinct from block A and thus form a triblock (co)polymer intermediate,
quenching the triblock (co)polymer intermediate with an acyl halide, an acid anhydride or a substance containing an active hydrogen atom to form a triblock (co)polymer; and
isolating the formed triblock (co)polymer.

13. A method for preparing a block copolymer, comprising the steps of:
anionically polymerizing one or more anionically polymerizable monomers to prepare a (co)polymeric anion; reacting the (co)polymer anion with a compound of the formula 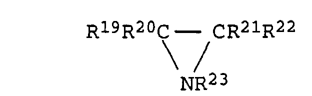 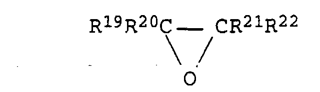 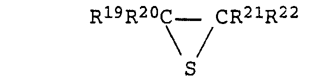 to form a (co)polymer-amide, (co)polymer-oxide or (co)polymer-sulfide anion, where R²³ is acyl and R¹⁹, R²⁰, R²¹ and R²² are independently selected from the group consisting of H, straight-chain or branched alkyl of from 1 to 20 carbon atoms, straight-chain or branched alkyl of from 1 to 20 carbon atoms substituted with from 1 to (2n+1) halogen atoms (where n is the number of carbon atoms in the alkyl group), straight-chain or branched alkenyl of from 2 to 20 carbon atoms, straight-chain or branched alkenyl of from 2 to 20 carbon atoms substituted with from 1 to (2n-1) halogen atoms (where n is the number of carbon atoms in the alkenyl group), straight-chain or branched alkynyl of from 2 to 20 carbon atoms, straight-chain or branched alkynyl of from 2 to 20 carbon atoms substituted with from 1 to (2n-3) halogen atoms (where n is the number of carbon atoms in the alkynyl group), aryl, aralkyl, heterocyclyl, halogen, and cyano, or any two of R¹⁹, R²⁰, R²¹ and R²² may be joined to form an alkylenyl group of from 1 to 6 carbon atoms and thus form a cycloalkylenyl ring of from 3 to 8 members;
metathesizing the (co)polymer-amide, (co)polymer-oxide or (co)polymer-sulfide anion with a phosphonium salt of the formula:
(PR⁶R⁷R⁸R⁹)⁺ X⁻
where R⁶, R⁷, R⁸ and R⁹ are independently alkyl of from 1 to 20 carbon atoms, aryl or aralkyl and wherein any pair of R⁶, R⁷, R⁸ and R⁹ may be joined to form a ring, including the possibility that both pairs of R⁶⁻R⁹ may be joined to form a ring, and X is an inorganic anion, to provide an initiator;
reacting the initiator with one or more monomers of the formula: 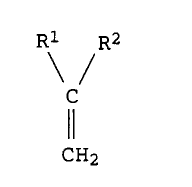 at a temperature of from -78°C to 40°C, in a solvent in which the initiator at least partially dissolves and which does not quench the reaction, for a length of time sufficient to polymerize the monomer, to form a reaction mixture, wherein:
R¹ is selected from the group consisting of H, CN, straight-chain or branched alkyl of from 1 to 6 carbon atoms which may be substituted with from 1 to (2n+1) halogen atoms, straight-chain or branched alkenyl of from 2 to 6 carbon atoms which may be substituted with from 1 to (2n-1) halogen atoms, straight-chain or branched alkynyl of from 2 to 6 carbon atoms which may be substituted with from 1 to (2n-3) halogen atoms, and aryl, where n is the number of carbon atoms in the alkyl, alkenyl or alkynyl group, and
R² is independently selected from the group consisting of CN, C(=X)R³, C(=X)NR⁴R⁵ and heterocyclic rings capable of stabilizing an α-anion, where X is NR (R is C₁-C₂₀ alkyl), O or S, R³ is alkyl of from 1 to 20 carbon atoms, alkoxy of from 1 to 20 carbon atoms or alkylthio of from 1 to 20 carbon atoms, and R⁴ and R⁵ are independently alkyl of from 1 to 20 carbon atoms or are joined together to form an alkylene group of from 2 to 5 carbon atoms, thus forming a 3- to 6-membered ring;
quenching the reaction mixture with an acyl halide, an acid anhydride or a substance containing an active hydrogen atom to form a block (co)polymer; and
isolating the formed block (co)polymer.

14. The method of Claim 13, wherein said anionically polymerizable monomer is selected from the group consisting of styrene, α-methylstyrene, styrene or α-methylstyrene having 1 to 5 C₁-C₄-alkyl and/or C₁-C₄-alkoxy substituents on the phenyl ring, butadiene, isoprene, dimethylbutadiene, or mixtures thereof.

15. The method of Claim 13, wherein R¹⁹ and R²⁰ are H, and R²¹ and R²² are independently selected from the group consisting of H, straight-chain or branched alkyl of from 1 to 10 carbon atoms (which may be substituted with from 1 to (2n+1) halogen atoms, where n is the number of carbon atoms in the alkyl group), straight-chain or branched alkenyl of from 2 to 6 carbon atoms (which may be substituted with from 1 to (2n-1) halogen atoms, where n is the number of carbon atoms in the alkenyl group), phenyl, or phenyl having from 1 to 3 substituents selected from the group consisting of alkyl of from 1 to 6 carbon atoms, alkoxy of from 1 to 4 carbon atoms, phenyl and halogen.

16. A block copolymer of the formula:
(co)polymer-(CR¹⁹R²⁰CR²¹R²²NR²³)-A
(co)polymer-(CR¹⁹R²⁰CR²¹R²²O)-A
or
(co)polymer-(CR¹⁹R²⁰CR²¹R²²S)-A
where:
the (co)polymer is one produced by anionic polymerization;
R¹⁹, R²⁰, R²¹ and R²² are independently selected from the group consisting of H, straight-chain or branched alkyl of from 1 to 20 carbon atoms, straight-chain or branched alkyl of from 1 to 20 carbon atoms substituted with from 1 to (2n+1) halogen atoms (where n is the number of carbon atoms in the alkyl group), straight-chain or branched alkenyl of from 2 to 20 carbon atoms, straight-chain or branched alkenyl of from 2 to 20 carbon atoms substituted with from 1 to (2n-1) halogen atoms (where n is the number of carbon atoms in the alkenyl group), straight-chain or branched alkynyl of from 2 to 20 carbon atoms, straight-chain or branched alkynyl of from 2 to 20 carbon atoms substituted with from 1 to (2n-3) halogen atoms (where n is the number of carbon atoms in the alkynyl group), aryl, aralkyl, heterocyclyl, halogen, and cyano, or any two of R¹⁹, R²⁰, R²¹ and R²² may be joined to form an alkylenyl group of from 1 to 6 carbon atoms and thus form a cycloalkylenyl ring of from 3 to 8 members;
R²³ is acyl; and
A is one or more distinct (co)polymer blocks of one or more monomers of the formula: 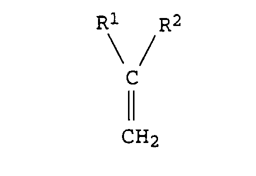 where:
R¹ is selected from the group consisting of H, CN, straight-chain or branched alkyl of from 1 to 6 carbon atoms which may be substituted with from 1 to (2n+1) halogen atoms, straight-chain or branched alkenyl of from 2 to 6 carbon atoms which may be substituted with from 1 to (2n-1) halogen atoms, straight-chain or branched alkynyl of from 2 to 6 carbon atoms which may be substituted with from 1 to (2n-3) halogen atoms, and aryl, where n is the number of carbon atoms in the alkyl, alkenyl or alkynyl group, and
R² is independently selected from the group consisting of CN, C(=X) R³, C(=X)NR⁴R⁵ and heterocyclic rings capable of stabilizing an α-anion, where X is NR (R is C₁-C₂₀ alkyl), O or S, R³ is alkyl of from 1 to 20 carbon atoms, alkoxy of from 1 to 20 carbon atoms or alkylthio of from 1 to 20 carbon atoms, and R⁴ and R⁵ are independently alkyl of from 1 to 20 carbon atoms or are joined together to form an alkylene group of from 2 to 5 carbon atoms, thus forming a 3- to 6-membered ring.

17. The block (co)polymer of Claim 16, wherein each block has weight average molecular weight or number average molecular weight of from 300 to 500,000 g/mol, more preferably 500 to 300,000 g/mol.

18. The block (co)polymer of Claim 16, having a M_{w}/Mₙ value of less than or equal to 2.0.

19. The block (co)polymer of Claim 16, wherein the (co)polymer is one produced by anionic polymerization of styrene, α-methylstyrene, styrene or α-methylstyrene having 1 to 5 C₁-C₄-alkyl and/or C₁-C₄-alkoxy substituents on the phenyl ring, butadiene, isoprene, dimethylbutadiene, or mixtures thereof.

## Patentansprüche

1. Verfahren zur Herstellung eines (Co)polymers, bei dem man:
ein anionisch polymerisierbares Monomer der Formel: 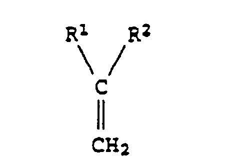 mit einem Initiator der Formel
(PR⁶R⁷R⁸R⁹)⁺ + (R¹⁰R¹¹N)-
(PR⁶R⁷R⁸R⁹)⁺ + (R¹²O)-
oder
(PR⁶R⁷R⁸R⁹)+ (R¹³S)-
bei einer Temperatur von -78°C bis 40°C in einem Lösungsmittel, in dem der Initiator zumindest teilweise löslich ist und das die Reaktion nicht quencht, über einen Zeitraum, der zur Polymerisation des Monomers bzw. der Monomere und zur Bildung einer Reaktionsmischung ausreicht, umsetzt, wobei:
R¹ aus der Gruppe bestehend aus H, CN, geradkettigem oder verzweigtem Alkyl mit 1 bis 6 Kohlenstoffatomen, das mit 1 bis (2n+1) Halogenatomen substituiert sein kann, geradkettigem oder verzweigtem Alkenyl mit 2 bis 6 Kohlenstoffatomen, das mit 1 bis (2n-1) Halogenatomen substituiert sein kann, geradkettigem oder verzweigtem Alkinyl mit 2 bis 6 Kohlenstoffatomen, das mit 1 bis (2n-3) Halogenatomen substituiert sein kann, und Aryl, wobei n für die Zahl der Kohlenstoffatome in der Alkyl-, Alkenyl- oder Alkinylgruppe steht, ausgewählt ist; und
R² unabhängig davon aus der Gruppe bestehend aus CN, C(=X) R³, C(=X)NR⁴R⁵ und zur Stabilisierung eines α-Anions befähigten heterocyclischen Ringen, worin X für NR, O oder S steht, wobei R für C₁-C₂₀-Alkyl steht; R³ für Alkyl mit 1 bis 20 Kohlenstoffatomen, Alkoxy mit 1 bis 20 Kohlenstoffatomen oder Alkylthio mit 1 bis 20 Kohlenstoffatomen steht und R⁴ und R⁵ unabhängig voneinander für Alkyl mit 1 bis 20 Kohlenstoffatomen stehen oder miteinander zu einer Alkylengruppe mit 2 bis 5 Kohlenstoffatomen verbunden sind und somit einen 3- bis 6-gliedrigen Ring bilden, ausgewählt ist;
R⁶, R⁷, R⁸ und R⁹ unabhängig voneinander für Alkyl mit 1 bis 20 Kohlenstoffatomen, Aryl oder Aralkyl stehen und ein beliebiges Paar der Reste R⁶, R⁷, R⁸ und R⁹ zu einem Ring verbunden sein kann, wobei auch beide Paare der Reste R⁶⁻R⁹ zu einem Ring verbunden sein können,
R¹⁰ und R¹¹ unabhängig voneinander für Alkyl mit 1 bis 20 Kohlenstoffatomen, Cycloalykl mit 3 bis 10 Kohlenstoffatomen, eine Arylgruppe, eine Trialkylsilylgruppe oder eine elektronegative Gruppe stehen oder miteinander zu einem Heterocyclus verbunden sein können, und
R¹² unabhängig davon für H, geradkettiges oder verzweigtes Alkyl mit 1 bis 20 Kohlenstoffatomen oder Cycloalkyl mit 3 bis 10 Kohlenstoffatomen, geradkettiges oder verzweigtes Alkenyl mit 2 bis 20 Kohlenstoffatomen, geradkettiges oder verzweigtes Alkinyl mit 2 bis 20 Kohlenstoffatomen, Aryl, Aralkyl oder einen (Co)polymerrest steht;
R¹³ unabhängig davon für R¹², geradkettiges oder verzweigtes Alkenyl mit 2 bis 20 Kohlenstoffatomen oder geradkettiges oder verzweigtes Alkinyl mit 2 bis 20 Kohlenstoffatomen steht;
die Reaktionsmischung mit einem Acylhalogenid, einem Säureanhydrid oder einer ein aktives Wasserstoffatom enthaltenden Substanz unter Bildung eines (Co)polymers quencht und
das gebildete (Co)polymer isoliert.

2. Verfahren nach Anspruch 1, bei dem das gebildete (Co)polymer ein gewichts- oder zahlenmittleres Molekulargewicht von 500 g/mol bis 300.000 g/mol aufweist.

3. Verfahren nach Anspruch 1, bei dem das (Co)polymer ein Verhältnis von gewichtsmittlerem Molekulargewicht (M_{w}) zu zahlenmittlerem Molekulargewicht (Mₙ) von höchstens 2,0 aufweist.

4. Verfahren nach Anspruch 1, bei dem man das anionisch polymerisierbare Monomer aus der Gruppe bestehend aus (Meth)acrylatestern von C₁-C₂₀-Alkoholen, Acrylnitril, Cyanoacrylatestern von C₁-C₂₀-Alkoholen, Didehydromalonatestern von C₁-C₆-Alkoholen, Vinylpyridinen, Vinyl-N-alkylpyrrolen, Vinyloxazolen, Vinylthiazolen, Vinylpyrimidinen und Vinylimidazolen, Vinyl-C₁-C₁₄-alkylkeconen, in denen das α-Kohlenstoffatom der Alkylgruppe kein Wasserstoffatom trägt, Vinylarylketonen und Styrolen mit elektronenabgebenden und elektronenanziehenden Gruppen am Phenylring auswählt.

5. Verfahren nach Anspruch 1, bei dem R⁶, R⁷, R⁸ und R⁹ unabhängig voneinander für Phenyl, Naphthyl, Phenyl mit 1 bis 5 Substituenten oder Naphthyl mit 1 bis 7 Substituenten steht, wobei die Substituenten unabhängig voneinander aus der Gruppe bestehend aus Alkyl mit 1 bis 6 Kohlenstoffatomen, Alkoxy mit 1 bis 6 Kohlenstoffatomen, Alkylthio mit 1 bis 6 Kohlenstoffatomen und NR¹⁴R¹⁵, worin R¹⁴ und R¹⁵ unabhängig voneinander für Alkyl mit 1 bis 6 Kohlenstoffatomen stehen, ausgewählt sind.

6. Verfahren nach Anspruch 1, bei dem man:
einen der Reste R¹⁰ und R¹¹ aus der Gruppe bestehend aus geradkettigem oder verzweigtem Alkyl mit 1 bis 6 Kohlenstoffatomen, Trimethylsilyl, Dimethyl-t-butylsilyl, Dimethyl-t-hexylsilyl, Phenyl oder Phenyl mit 1 bis 3 Substituenten aus der Gruppe bestehend aus Alkyl mit 1 bis 6 Kohlenstoffatomen, Alkoxy mit 1 bis 4 Kohlenstoffatomen, Phenyl und Halogen und
den anderen der Reste R¹⁰ und R¹¹ aus der Gruppe bestehend aus -C(O)OR, -C (O)H, -C(O)N(R)₂, C(O)SR, -CN, -S(O)R, -SO₂R, -SO₃R, -NO₂, -P(O)(OR)₂,-P(O)(R)₂, -P(O)(OR)(R), -P(O)(OR'O), -P(O)(NR₂)(R), -P(O)(NR₂)₂ und -P(O)([NR]R'[NR]), worin R (bei Gegenwart von mehr als einem Rest R unabhängig voneinander) für C₁-C₆-Alkyl, Benzyl oder Phenyl und R' für C₂-C₄-Alkylen oder 1,2-Phenylen steht, auswählt.

7. Verfahren nach Anspruch 1, bei dem R¹³ für eine Gruppe der Formel -CR¹⁶=CR¹⁷R¹⁸, worin R¹⁶, R¹⁷ und R¹⁸ unabhängig voneinander H, Alkyl, Aryl, Alkoxy oder Phenoxy und vorzugsweise H, Alkyl mit 1 bis 6 Kohlenstoffatomen, Phenyl oder Phenyl mit 1 bis 3 Substituenten aus der Gruppe bestehend aus Alkyl mit 1 bis 6 Kohlenstoffatomen, Alkoxy mit 1 bis 4 Kohlenstoffatomen, Phenyl und Halogen bedeuten, steht.

8. Verfahren nach Anspruch 1, bei dem R¹⁰ und R¹¹ miteinander zu einem heterocyclischen Ring aus der Gruppe bestehend aus: 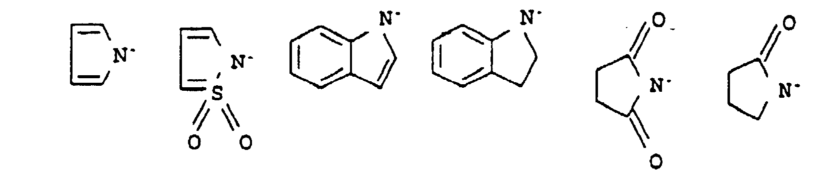 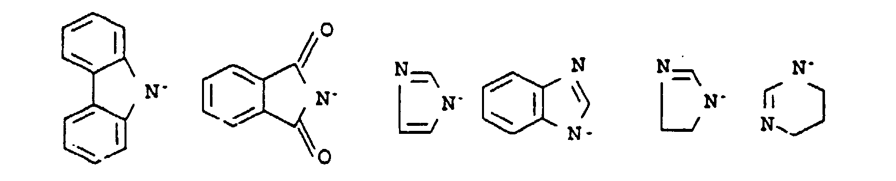 der einen oder mehrere Alkyl-, Phenyl-, Vinyl-, Halogen-, Nitro- oder Cyanosubstituenten tragen kann, die jeweils an ein oder mehrere der verschiedenen Kohlenstoffatome des heterocyclischen Rings gebunden sein können,
verbunden sind.

9. Blockcopolymer der Formel:
R^{11"} (NR¹⁰-A-B)ₓ
R^{12"}(O-A-B)ₓ
R^{13"}(S-A-B)ₓ
worin
A für einen durch anionische Polymerisation eines Monomers oder mehrerer Monomere der Formel: 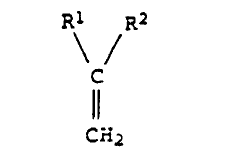 worin
R¹ aus der Gruppe bestehend aus H, CN, geradkettigem oder verzweigtem Alkyl mit 1 bis 6 Kohlenstoffatomen, das mit 1 bis (2n+1) Halogenatomen substituiert sein kann, geradkettigem oder verzweigtem Alkenyl mit 2 bis 6 Kohlenstoffatomen, das mit 1 bis (2n-1) Halogenatomen substituiert sein kann, geradkettigem oder verzweigtem Alkinyl mit 2 bis 6 Kohlenstoffatomen, das mit 1 bis (2n-3) Halogenatomen substituiert sein kann, und Aryl, wobei n für die Zahl der Kohlenstoffatome in der Alkyl-, Alkenyl- oder Alkinylgruppe steht, ausgewählt ist und
R² unabhängig davon aus der Gruppe bestehend aus CN, C(=X) R³, C(=X)NR⁴R⁵ und zur Stabilisierung eines α-Anions befähigten heterocyclischen Ringen, worin X für NR, O oder S steht, wobei R für C₁-C₂₀-Alkyl steht; R³ für Alkyl mit 1 bis 20 Kohlenstoffatomen, Alkoxy mit 1 bis 20 Kohlenstoffatomen oder Alkylthio mit 1 bis 20 Kohlenstoffatomen steht und R⁴ und R⁵ unabhängig voneinander für Alkyl mit 1 bis 20 Kohlenstoffatomen stehen oder miteinander zu einer Alkylengruppe mit 2 bis 5 Kohlenstoffatomen verbunden sind und somit einen 3- bis 6-gliedrigen Ring bilden, ausgewählt ist;
hergestellten (Co)polymerblock steht;
B für einen oder mehrere verschiedene, durch anionische Polymerisation eines Monomers oder mehrerer Monomere der Formel: 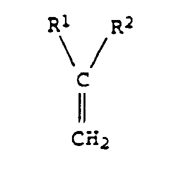 worin R¹ und R² die oben angegebenen Bedeutungen haben, hergestellte (Co)polymerblöcke steht;
R¹⁰ für Alkyl mit 1 bis 20 Kohlenstoffatomen, eine Arylgruppe, eine Trialkylsilylgruppe oder eine elektronegative Gruppe steht und
R^{11"}, R^{12"} und R^{13"} unabhängig voneinander für einen ein- oder mehrwertigen Alkyl-, Cycloalkyl-, Aryloder Aralkylrest, dessen Wertigkeit gleich x ist und der mit einer oder mehreren Alkyl-, Cycloalkyl-, Halogen-, Phenyl-, Nitro- oder elektronenanziehenden Gruppen substituiert sein kann, stehen
und X mindestens eins ist.

10. Blockcopolymer nach Anspruch 9, bei dem die Formel aus der Gruppe bestehend aus
B-A-(R¹⁰NR^{11'}NR¹⁰)-A-B
B-A-(OR^{12'}O)-A-B
und
B-A-(SR^{13'}S)-A-B,
worin R^{11'}, R^{12'} und R^{13'} unabhängig voneinander für einen zweiwertigen Alkylenyl-, Cycloalkylenyl-, Arylenyl- oder Aralkylenylrest, der mit einer oder mehreren Alkyl-, Cycloalkyl-, Halogen-, Phenyl-, Nitro- oder elektronenanziehenden Gruppen substituiert sein kann, stehen, ausgewählt ist.

11. Verfahren zur Herstellung eines verzweigten Copolymers, bei dem man:
mindestens ein anionisch polymerisierbares Monomer der Formel: 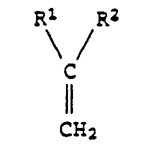 mit einem Initiator der Formel
[(PR⁶R⁷R⁸R⁹)⁺]ₓ R^{11"}-(-N⁻R¹⁰)ₓ
[(PR⁶R⁷R⁸R⁹)⁺]ₓ R^{12"}-(-O⁻)ₓ
oder
[(PR⁶R⁷R⁸R⁹)⁺]ₓ R^{13"}-(-S⁻)ₓ
bei einer Temperatur von -78°C bis 40°C in einem Lösungsmittel, in dem der Initiator zumindest teilweise löslich ist und das die Reaktion nicht quencht, über einen Zeitraum, der zur Polymerisation des ersten Monomers ausreicht, zu einem Zwischenprodukt eines verzweigten (Co)polymers umsetzt, wobei:
R¹ aus der Gruppe bestehend aus H, CN, Alkyl mit 1 bis 6 Kohlenstoffatomen (das wie oben beschrieben halogeniert sein kann) und Aryl, ausgewählt ist;
R² unabhängig davon aus der Gruppe bestehend aus CN, C(=X) R³, C(=X)NR⁴R⁵ und zur Stabilisierung eines α-Anions befähigten heterocyclischen Ringen, worin X für NR, O oder S steht, wobei R für C₁-C₂₀-Alkyl steht; R³ für Alkyl mit 1 bis 20 Kohlenstoffatomen, Alkoxy mit 1 bis 20 Kohlenstoffatomen oder Alkylthio mit 1 bis 20 Kohlenstoffatomen steht und R⁴ und R⁵ unabhängig voneinander für Alkyl mit 1 bis 20 Kohlenstoffatomen stehen oder miteinander zu einer Alkylengruppe mit 2 bis 5 Kohlenstoffatomen verbunden sind und somit einen 3- bis 6-gliedrigen Ring bilden, ausgewählt ist;
R⁶, R⁷, R⁸ und R⁹ unabhängig voneinander für Alkyl mit 1 bis 20 Kohlenstoffatomen, Aryl oder Aralkyl stehen (wobei ein beliebiges Paar der Reste R⁶, R⁷, R⁸ und R⁹ zu einem Ring verbunden sein kann, wobei auch beide Paare der Reste R⁶⁻R⁹ zu einem Ring verbunden sein können),
R¹⁰ für Alkyl mit 1 bis 20 Kohlenstoffatomen, Cycloalykl mit 3 bis 10 Kohlenstoffatomen, eine Arylgruppe, eine Trialkylsilylgruppe oder eine elektronegative Gruppe steht,
R^{11"}, R^{12"} und R^{13"} unabhängig voneinander für einen ein- oder mehrwertigen Alkyl-, Cycloalkyl-, Aryl-oder Aralkylrest, dessen Wertigkeit gleich x ist und der mit einer oder mehreren Alkyl-, Cycloalkyl-, Halogen-, Phenyl-, Nitro- oder elektronenanziehenden Gruppen substituiert sein kann, stehen, oder
R¹⁰ und R^{11"} miteinander zu einem Heterocyclus verbunden sein können, und
x für mindestens 3 steht;
das Zwischenprodukt eines verzweigten (Co)polymers mit einem Acylhalogenid, einem Säureanhydrid oder einer ein aktives Wasserstoffatom enthaltenden Substanz unter Bildung eines verzweigten (Co)polymers quencht und
das gebildete verzweigte (Co)polymer isoliert.

12. Verfahren zur Herstellung eines Dreiblock-Copolymers, bei dem man:
mindestens ein anionisch polymerisierbares Monomer der Formel: 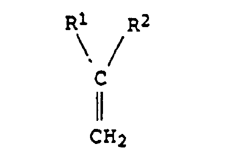 mit einem Initiator der Formel
[(PR⁶R⁷R⁸R⁹)⁺]₂ (R¹⁰NR^{11'}NR¹⁰)²⁻
[(PR⁶R⁷R⁸R⁹)⁺]₂ (OR^{12'}O)²⁻
oder
[(PR⁶R⁷R⁸R⁹)⁺]₂ (SR^{13'}S)²⁻
bei einer Temperatur von -78°C bis 40°C in einem Lösungsmittel, in dem der Initiator zumindest teilweise löslich ist und das die Reaktion nicht quencht, über einen Zeitraum, der zur Polymerisation des ersten Monomers ausreicht, umsetzt, wobei:
R¹ aus der Gruppe bestehend aus H, CN, geradkettigem oder verzweigtem Alkyl mit 1 bis 6 Kohlenstoffatomen, das mit 1 bis (2n+1) Halogenatomen substituiert sein kann, geradkettigem oder verzweigtem Alkenyl mit 2 bis 6 Kohlenstoffatomen, das mit 1 bis (2n-1) Halogenatomen substituiert sein kann, geradkettigem oder verzweigtem Alkinyl mit 2 bis 6 Kohlenstoffatomen, das mit 1 bis (2n-3) Halogenatomen substituiert sein kann, und Aryl, wobei n für die Zahl der Kohlenstoffatome in der Alkyl-, Alkenyl- oder Alkinylgruppe steht, ausgewählt ist;
R² unabhängig davon aus der Gruppe bestehend aus CN, C(=X) R³, C(=X)NR⁴R⁵ und zur Stabilisierung eines α-Anions befähigten heterocyclischen Ringen, worin X für NR, O oder S steht, wobei R für C₁-C₂₀-Alkyl steht; R³ für Alkyl mit 1 bis 20 Kohlenstoffatomen, Alkoxy mit 1 bis 20 Kohlenstoffatomen oder Alkylthio mit 1 bis 20 Kohlenstoffatomen steht und R⁴ und R⁵ unabhängig voneinander für Alkyl mit 1 bis 20 Kohlenstoffatomen stehen oder miteinander zu einer Alkylengruppe mit 2 bis 5 Kohlenstoffatomen verbunden sind und somit einen 3- bis 6-gliedrigen Ring bilden, ausgewählt ist;
R⁶, R⁷, R⁸ und R⁹ unabhängig voneinander für Alkyl mit 1 bis 20 Kohlenstoffatomen, Aryl oder Aralkyl stehen (wobei ein beliebiges Paar der Reste R⁶, R⁷,
R⁸ und R⁹ zu einem Ring verbunden sein kann, wobei auch beide Paare der Reste R⁶⁻R⁹ zu einem Ring verbunden sein können),
R¹⁰ für Alkyl mit 1 bis 20 Kohlenstoffatomen, Cycloalykl mit 3 bis 10 Kohlenstoffatomen, eine Arylgruppe, eine Trialkylsilylgruppe oder eine elektronegative Gruppe steht,
R^{11'}, R^{12'} und R^{13'} unabhängig voneinander für einen zweiwertigen Alkylenyl-, Cycloalkylenyl-, Arylenyl- oder Aralkylenylrest, der mit einer oder mehreren Alkyl-, Cycloalkyl-, Halogen-, Phenyl-, Nitro- oder elektronenanziehenden Gruppen substituiert sein kann, stehen, oder
R¹⁰ und R¹¹' miteinander zu einem Heterocyclus verbunden sein können;
ein zweites Monomer der Formel 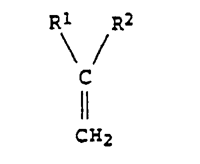 worin R¹ und R² die oben angegebenen Bedeutungen haben, bei einer Temperatur von -78°C bis 40°C zusetzt und über einen Zeitraum, der zur Bildung eines von Block A verschiedenen (Co)polymerblocks und somit zur Bildung eines Dreiblock-(Co)polymer-Zwischenprodukts ausreicht, umsetzt;
das Dreiblock-(Co)polymer-Zwischenprodukt mit einem Acylhalogenid, einem Säureanhydrid oder einer ein aktives Wasserstoffatom enthaltenden Substanz unter Bildung eines Dreiblock-(Co)polymers quencht und
das gebildete Dreiblock-(Co)polymer isoliert.

13. Verfahren zur Herstellung eines Blockcopolymers, bei dem man:
ein oder mehrere anionisch polymerisierbare Monomere anionisch zu einem (Co)polymer-Anion polymerisiert;
das (Co)polymer-Anion mit einer Verbindung der Formel 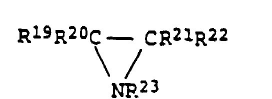 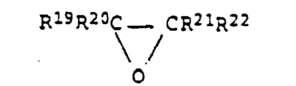 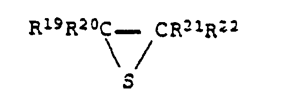 zu einem (Co)polymeramid-, (Co)polymeroxid- oder (Co)polymersulfid-Anion umsetzt, wobei R²³ für Acyl steht und R¹⁹, R²⁰, R²¹ und R²² unabhängig voneinander aus der Gruppe bestehend aus H, gegebenenfalls mit 1 bis (2n+1) Halogenatomen substituiertem geradkettigem oder verzweigtem Alkyl mit 1 bis 20 Kohlenstoffatomen (wobei n die Zahl der Kohlenstoffatome in der Alkylgruppe bedeutet), gegebenenfalls mit 1 bis (2n-1) Halogenatomen substituiertem geradkettigem oder verzweigtem Alkenyl mit 2 bis 20 Kohlenstoffatomen (wobei n die Zahl der Kohlenstoffatome in der Alkenylgruppe bedeutet), gegebenenfalls mit 1 bis (2n-3) Halogenatomen substituiertem geradkettigem oder verzweigtem Alkinyl mit 2 bis 20 Kohlenstoffatomen (wobei n die Zahl der Kohlenstoffatome in der Alkinylgruppe bedeutet), Aryl, Aralkyl, Heterocyclyl, Halogen und Cyano ausgewählt sind oder zwei der Reste R¹⁹, R²⁰, R²¹ und R²² miteinander zu einer Alkylenylgruppe mit 1 bis 6 Kohlenstoffatomen verbunden sein und somit einen 3- bis 8-gliedrigen Cycloalkylenylring bilden können,
das (Co)polymeramid-, (Co)polymeroxid- oder (Co)polymersulfid-Anion mit einem Phosphoniumsalz der Formel:
(PR⁶R⁷R⁸R⁹)⁺ X⁻
worin R⁶, R⁷, R⁸ und R⁹ unabhängig voneinander für Alkyl mit 1 bis 20 Kohlenstoffatomen, Aryl oder Aralkyl stehen und ein beliebiges Paar der Reste R⁶, R⁷, R⁸ und R⁹ zu einem Ring verbunden sein kann, wobei auch beide Paare der Reste R⁶⁻R⁹ zu einem Ring verbunden sein können, und X für ein anorganisches Anion steht, methatesiert und so einen Initiator bereitstellt;
den Initiator mit einem oder mehreren Monomeren der Formel: 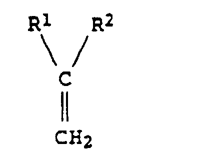 bei einer Temperatur von -78°C bis 40°C in einem Lösungsmittel, in dem der Initiator zumindest teilweise löslich ist und das die Reaktion nicht quencht, über einen Zeitraum, der zur Polymerisation des Monomers ausreicht, unter Bildung einer Reaktionsmischung umsetzt, wobei:
R¹ aus der Gruppe bestehend aus H, CN, geradkettigem oder verzweigtem Alkyl mit 1 bis 6 Kohlenstoffatomen, das mit 1 bis (2n+1) Halogenatomen substituiert sein kann, geradkettigem oder verzweigtem Alkenyl mit 2 bis 6 Kohlenstoffatomen, das mit 1 bis (2n-1) Halogenatomen substituiert sein kann, geradkettigem oder verzweigtem Alkinyl mit 2 bis 6 Kohlenstoffatomen, das mit 1 bis (2n-3) Halogenatomen substituiert sein kann, und Aryl, wobei n für die Zahl der Kohlenstoffatome in der
Alkyl-, Alkenyl- oder Alkinylgruppe steht, ausgewählt ist;
R² unabhängig davon aus der Gruppe bestehend aus CN, C(=X) R³, C(=X)NR⁴R⁵ und zur Stabilisierung eines α-Anions befähigten heterocyclischen Ringen, worin X für NR (worin R für C₁-C₂₀-Alkyl steht), O oder S steht, R³ für Alkyl mit 1 bis 20 Kohlenstoffatomen, Alkoxy mit 1 bis 20 Kohlenstoffatomen oder Alkylthio mit 1 bis 20 Kohlenstoffatomen steht und R⁴ und R⁵ unabhängig voneinander für Alkyl mit 1 bis 20 Kohlenstoffatomen stehen oder miteinander zu einer Alkylengruppe mit 2 bis 5 Kohlenstoffatomen verbunden sind und somit einen 3- bis 6-gliedrigen Ring bilden, ausgewählt ist;
die Reaktionsmischung mit einem Acylhalogenid, einem Säureanhydrid oder einer ein aktives Wasserstoffatom enthaltenden Substanz unter Bildung eines Block(co)polymers quencht und
das gebildete Block(co)polymer isoliert.

14. Verfahren nach Anspruch 13, bei dem man das anionisch polymerisierbare Monomer aus der Gruppe bestehend aus Styrol, α-Methylstyrol, Styrol oder α-Methylstyrol mit 1 bis 5 C₁-C₄-Alkyl- und/oder C₁-C₄-Alkoxysubstituenten am Phenylring, Butadien, Isopren, Dimethylbutadien oder deren Gemischen auswählt.

15. Verfahren nach Anspruch 13, bei dem R¹⁹ und R²⁰ für H stehen und R²¹ und R²² unabhängig voneinander aus der Gruppe bestehend aus H, gegebenenfalls mit 1 bis (2n+1) Halogenatomen substituiertem geradkettigem oder verzweigtem Alkyl mit 1 bis 10 Kohlenstoffatomen (wobei n die Zahl der Kohlenstoffatome in der Alkylgruppe bedeutet), gegebenenfalls mit 1 bis (2n-1) Halogenatomen substituiertem geradkettigem oder verzweigtem Alkenyl mit 2 bis 6 Kohlenstoffatomen (wobei n die Zahl der Kohlenstoffatome in der Alkenylgruppe bedeutet), Phenyl oder Phenyl mit 1 bis 3 Substituenten aus der Gruppe bestehend aus Alkyl mit 1 bis 6 Kohlenstoffatomen, Alkoxy mit 1 bis 4 Kohlenstoffatomen, Phenyl und Halogen ausgewählt sind.

16. Blockcopolymer der Formel:
(Co)polymer-(CR¹⁹R²⁰CR²¹R²²NR²³)-A
(Co)polymer-(CR¹⁹R²⁰CR²¹R²²O)-A
oder
(Co)polymer-(CR¹⁹R²⁰CR²¹R²²S)-A
worin:
das (Co)polymer durch anionische Polymerisation hergestellt wurde;
R¹⁹, R²⁰, R²¹ und R²² unabhängig voneinander aus der Gruppe bestehend aus H, gegebenenfalls mit 1 bis (2n+1) Halogenatomen substituiertem geradkettigem oder verzweigtem Alkyl mit 1 bis 20 Kohlenstoffatomen (wobei n die Zahl der Kohlenstoffatome in der Alkylgruppe bedeutet), gegebenenfalls mit 1 bis (2n-1) Halogenatomen substituiertem geradkettigem oder verzweigtem Alkenyl mit 2 bis 20 Kohlenstoffatomen (wobei n die Zahl der Kohlenstoffatome in der Alkenylgruppe bedeutet), gegebenenfalls mit 1 bis (2n-3) Halogenatomen substituiertem geradkettigem oder verzweigtem Alkinyl mit 2 bis 20 Kohlenstoffatomen (wobei n die Zahl der Kohlenstoffatome in der Alkinylgruppe bedeutet), Aryl, Aralkyl, Heterocyclyl, Halogen und Cyano ausgewählt sind oder zwei der Reste R¹⁹, R²⁰, R²¹ und R²² miteinander zu einer Alkylenylgruppe mit 1 bis 6 Kohlenstoffatomen verbunden sein und somit einen 3- bis 8-gliedrigen Cycloalkylenylring bilden können,
R²³ für Acyl steht und
A für einen oder mehrere verschiedene (Co)polymerblöcke aus einem oder mehreren Monomeren der Formel: 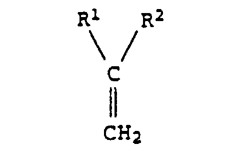 worin:
R¹ aus der Gruppe bestehend aus H, CN, geradkettigem oder verzweigtem Alkyl mit 1 bis 6 Kohlenstoffatomen, das mit 1 bis (2n+1) Halogenatomen substituiert sein kann, geradkettigem oder verzweigtem Alkenyl mit 2 bis 6 Kohlenstoffatomen, das mit 1 bis (2n-1) Halogenatomen substituiert sein kann, geradkettigem oder verzweigtem Alkinyl mit 2 bis 6 Kohlenstoffatomen, das mit 1 bis (2n-3) Halogenatomen substituiert sein kann, und Aryl, wobei n für die Zahl der Kohlenstoffatome in der Alkyl-, Alkenyl- oder Alkinylgruppe steht, ausgewählt ist und
R² unabhängig davon aus der Gruppe bestehend aus CN, C(=X) R³, C(=X)NR⁴R⁵ und zur Stabilisierung eines α-Anions befähigten heterocyclischen Ringen, worin X für NR (wobei R für C₁-C₂₀-Alkyl steht), O oder S steht, R³ für Alkyl mit 1 bis 20 Kohlenstoffatomen, Alkoxy mit 1 bis 20 Kohlenstoffatomen oder Alkylthio mit 1 bis 20 Kohlenstoffatomen steht und R⁴ und R⁵ unabhängig voneinander für Alkyl mit 1 bis 20 Kohlenstoffatomen stehen oder miteinander zu einer Alkylengruppe mit 2 bis 5 Kohlenstoffatomen verbunden sind und somit einen 3- bis 6-gliedrigen Ring bilden, ausgewählt ist; steht.

17. Block(co)polymer nach Anspruch 16, bei dem jeder Block ein gewichts- oder zahlenmittleres Molekulargewicht von 300 bis 500.000 g/mol, vorzugsweise 500 bis 300.000 g/mol, aufweist.

18. Block(co)polymer nach Anspruch 16 mit einem M_{w}/Mₙ-Wert von höchstens 2,0.

19. Block(co)polymer nach Anspruch 16, hergestellt durch anionische Polymerisation von Styrol, α-Methylstyrol, Styrol oder α-Methylstyrol mit 1 bis 5 C₁-C₄-Alkyl- und/oder C₁-C₄-Alkoxysubstituenten am Phenylring, Butadien, Isopren, Dimethylbutadien oder deren Gemischen.

## Revendications

1. Procédé de production d'un (co)polymère comprenant:
la réaction d'un monomère anioniquement polymérisable de la formule 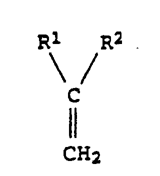 avec un initiateur de la formule
(PR⁶R⁷R⁸R⁹)⁺ (R¹⁰R¹¹N⁾⁻
(PR⁶R⁷R⁸R⁹)⁺ (R¹²O)⁻
ou
(PR⁶R⁷R⁸R⁹)⁺ (R¹³S)⁻
à une température de -78°C à 40°C, dans un solvant dans lequel l'initiateur se dissout tout au moins partiellement et qui ne "gèle" pas la réaction, pendant une durée suffisante pour polymériser le(s) monomère(s) et former un mélange réactionnel, caractérisé en ce que:
R¹ est choisi dans le groupe formé par H, CN, un radical alkyle à chaîne linéaire ou ramifié comportant de 1 à 6 atomes de carbone, qui peut être substitué par 1 à (2n+1) atomes d'halogène, un radical alcényle à chaîne linéaire ou ramifiée comportant de 2 à 6 atomes de carbone qui peut être substitué par 1 à (2n-1) atomes d'halogène, un radical alcynyle à chaîne linéaire ou ramifiée de 2 à 6 atomes de carbone, qui peut être substitué par de 1 à (2n-3) atomes d'halogène, et un radical aryle, où n est le nombre d'atomes de carbone dans le radical alkyle, alcényle ou alcynyle; et
R² est indépendamment choisi dans le groupe formé par CN, C(=X) R³, C(=X)NR⁴R⁵ et des noyaux hétérocycliques capables de stabiliser un anion α, où X est NR, O ou S, R étant un alkyle en C₁ à C₂₀;
R³ est un alkyle comportant de 1 à 20 atomes de carbone, un alkoxy comportant de 1 à 20 atomes de carbone ou un alkylthio comportant de 1 à 20 atomes de carbone; et R⁴ et R⁵ sont indépendamment l'un de l'autre un alkyle comportant de 1 à 20 atomes de carbone ou sont liés ensemble pour former un radical alkylène comportant de 2 à 5 atomes de carbone, formant donc un noyau avec 3 à 6 membres;
R⁶, R⁷, R⁸ et R⁹ représentent, indépendamment les uns des autres, un alkyle comportant de 1 à 20 atomes de carbone, un aryle ou un aralkyle, et n'importe quelle paire formée de R⁶, R⁷, R⁸ et R⁹ peut être réunie pour former un noyau, ceci comprenant la possibilité que toutes les paires R⁶ à R⁹ peuvent être réunies pour former un noyau,
R¹⁰ et R¹¹ représentent indépendamment l'un de l'autre un alkyle comportant de 1 à 20 atomes de carbone, un cycloalkyle comportant de 3 à 10 atomes de carbone, un radical aryle, un radical trialkylsilyle ou un radical électronégatif, ou bien R¹⁰ et R¹¹ peuvent être réunis pour former un hétérocycle, et
R¹² représente indépendamment H, un radical alkyle à chaîne linéaire ou ramifiée de 1 à 20 atomes de carbone ou cycloalkyle comportant de 3 à 10 atomes de carbone, alcényle à chaîne linéaire ou ramifiée comportant de 2 à 20 atomes de carbone, alcynyle à chaîne linéaire ou ramifiée comportant de 2 à 20 atomes de carbone, aryle, aralkyle ou (co)polymère;
R¹³ représente indépendamment R¹², un radical alcényle à chaîne linéaire ou ramifiée comportant de 2 à 20 atomes e carbone, ou alcynyle à chaîne linéaire ou ramifiée comportant de 2 à 20 atomes de carbone;
le refroidissement brusque du mélange réactionnel au moyen d'un halogénure d'acyle, d'un anhydride d'acide ou d'une substance contenant un atome d'hydrogène actif pour former un (co)polymère; et
l'isolation du (co)polymère formé.

2. Procédé selon la revendication 1, caractérisé en ce que ledit (co)polymère formé présente un poids moléculaire moyen pondéral ou numérique de 500 à 300 000 g/mole.

3. Procédé selon la revendication 1, caractérisé en ce que ledit (co)polymère formé présente un rapport poids moléculaire pondéral moyen (M_{w})/poids moléculaire numérique moyen (Mₙ) de 2,0 ou moins.

4. Procédé selon la revendication 1, caractérisé en ce que ledit monomère anioniquement polymérisable est choisi dans le groupe formé par des esters (méth)acryliques d'alcools en C₁ à C₂₀, l'acrylonitrile, des esters cyanoacryliques d'alcools en C₁ à C₂₀, des esters didéhydromaloniques d'alcools en C₁ à C₆, des vinylpyridines, des N-alkylpyrroles de vinyle, des vinyloxazones, des vinylthiazols, des vinylpyrimidines et des vinylimidazoles, des alkylcétones vinyliques en C₁ à C₁₄ où l'atome de carbone a du radical alkyle ne porte pas un atome d'hydrogène, des vinylarylcétones et styrènes portant des radicaux donneurs d'électrons et capteurs d'électrons sur le noyau phényle.

5. Procédé selon la revendication 1, caractérisé en ce que R⁶, R⁷, R⁸ et R⁹ représentent indépendamment les une des autres un radical phényle, naphtyle, phényle comportant de 1 à 5 substituants ou naphtyle comportant de 1 à 7 substituants, les substituants étant choisis indépendamment les uns des autres dans le groupe formé par un radical alkyle comportant de 1 à 6 atomes de carbone, alkoxy comportant de 1 à 6 atomes de carbone, alkylthio comportant de 1 à 6 atomes de carbone et NR¹⁴R¹⁵, où R¹⁴ et R¹⁵ représentent indépendamment l'un de l'autre un radical alkyle comportant de 1 à 6 atomes de carbone.

6. Procédé selon la revendication 1, caractérisé en ce que:
L'un des restes R¹⁰ et R¹¹ est choisi dans le groupe formé par un radical alkyle à chaîne linéaire ou ramifiée comportant de 1 à 6 atomes de carbone, un triméthylsilyle, diméthyl-t-butylsilyle, diméthyl-t-hexylsilyle, phényle ou phényle comportant de 1 à 3 substituants choisis dans le groupe formé par un radical alkyle comportant de 1 à 6 atomes de carbone, alkoxy comportant de 1 à 4 atomes de carbone, phényle et halogène, et
l'autre des deux restes R¹⁰ et R¹¹ est choisi dans le groupe formé par -C(O)OR, -C(O)H, -C(O)N(R)₂, -C(O)SR, -CN, -S(O)R, -SO₂R, - SO₃R, -NO₂, -P(O)(OR)₂, -P(O)(R)₂, -P(O)(OR)(R), -P(O)(OR'O), -P(O)(NR₂)(R), -P(O)(NR₂)₂ et -P(O)([NR]R'[NR]), où R représente (indépendamment si plus de 1 groupe R est présent) un radical phényle, benzyle ou alkyle en C₁ à C₆ et R' représente un radical alkylène en C₂ à C₄ ou 1,2-phénylène.

7. Procédé selon la revendication 1, caractérisé en ce que R¹³ est un radical de formule -CR¹⁶=CR¹⁷R¹⁸, où R¹⁶, R¹⁷ et R¹⁸ représentent indépendamment les uns des autres H, un radical alkyle, aryle, alkoxy ou phénoxy, et plus préférentiellement H, un radical alkyle comportant de 1 à 6 atomes de carbone, phényle, ou phényle comportant de 1 à 3 substituants choisis dans le groupe formé par un radical alkyle comportant de 1 à 6 atomes de carbone, alkoxy comportant de 1 à 4 atomes de carbone, phényle et halogène.

8. Procédé selon la revendication 1, caractérisé en ce que R¹⁰ et R¹¹ sont réunis pour former un noyau hétérocyclique choisi dans le groupe formé par: 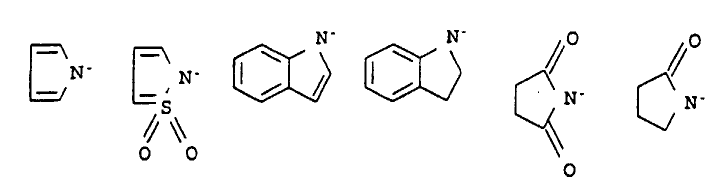 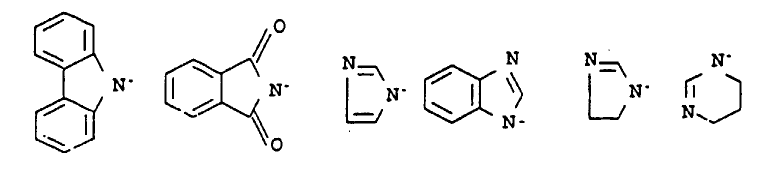 qui peut comporter un ou plusieurs substituants alkyle, phényle, vinyle, halogène, nitro ou cyano, qui peuvent dans chaque cas être attachés à un ou plusieurs atomes de carbone différents du noyau hétérocyclique.

9. Copolymère de greffage de la formule:
R^{11"}(NR¹⁰-A-B)ₓ
R^{12"}(O-A-B)ₓ
R^{13"}(S-A-B)ₓ
où
A est un (co)polymère de greffage produit par polymérisation anionique d'un ou plusieurs monomères de la formule: 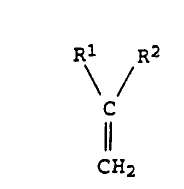 dans laquelle
R¹ est choisi dans le groupe formé par H, CN, un radical alkyle à chaîne linéaire ou ramifiée comportant de 1 à 6 atomes de carbone, qui peuvent être substitués par de 1 à (2n+1) atomes d'halogène, un radical alcényle à chaîne linéaire ou ramifiée comportant de 2 à 6 atomes de carbone, qui peuvent être substitués par de 1 à (2n-1) atomes d'halogène, un radical alcynyle à chaîne linéaire ou ramifiée comportant de 2 à 6 atomes de carbone qui peuvent être substitués par de 1 à (2n-3) atomes d'halogène, et un radical aryle, où n est le nombre d'atomes de carbone dans le radical alkyle, alcényle ou alcynyle; et
R² est indépendamment choisi dans le groupe formé par CN, C(=X)R³, C(=X)NR⁴R⁵ et des noyaux hétérocycliques capables de stabiliser un anion a, où X représente NR, O ou S, R représentant un radical alkyle en C₁ à C₂₀; R³ représente un radical alkyle comportant de 1 à 20 atomes de carbone, alkoxy comportant de 1 à 20 atomes de carbone ou alkylthio comportant de 1 à 20 atomes de carbone; et R⁴ et R⁵ représentent indépendamment l'un de l'autre un radical alkyle comportant de 1 à 20 atomes de carbone ou sont réunis pour former un radical alkylène comportant de 2 à 5 atomes de carbone, formant donc un noyau à 3 à 6 membres;
B comporte un ou plusieurs (co)polymères de greffage distincts produits par polymérisation anionique d'un ou plusieurs monomères de formule 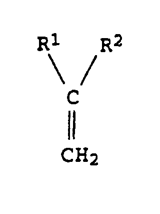 dans laquelle R¹ et R² ont les significations attribuées ci-avant;
R¹⁰ représente un radical alkyle comportant de 1 à 20 atomes de carbone, un radical aryle, un radical trialkylsilyle ou un radical électronégatif, et
R^{11"}, R^{12"} et R^{13"} représentent, indépendamment les uns des autres, un radical aralkyle, aryle, cycloalkyle ou alkyle monovalent ou multivalent, dans lequel la valence est égale à x et qui peut être substitué par un ou plusieurs radicaux alkyle, cycloalkyle, halogène, phényle, nitro ou capteur d'électrons; et
x est égal à 1 au moins.

10. Copolymère de greffage selon la revendication 9, caractérisé en ce que ladite formule est choisie dans le groupe formé par:
B-A-(R¹⁰NR^{11'}NR¹⁰)-A-B
B-A-(OR^{12'}O)-A-B
et
B-A-(SR^{13'}S)-A-B
dans laquelle R^{11'}, R^{12'}et R^{13'} représentent, indépendamment les uns des autres, un radical aralkylényle, arylényle, cycloalkylényle ou alkylényle bivalent, qui peut être substitué par un ou plusieurs radicaux alkyle, cycloalkyle, halogène, phényle, nitro ou capteur d'électrons.

11. Procédé de préparation d'un copolymère ramifié, comprenant:
La réaction d'au moins un monomère anioniquement polymérisable de formule: 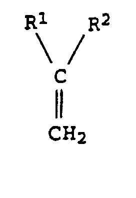 avec un initiateur de formule
[(PR⁶R⁷R⁸R⁹)⁺]ₓR^{11'}-(-N-R¹⁰)ₓ
[(PR⁶R⁷R⁸R⁹)⁺]ₓR^{12'}-(-O⁻)ₓ
ou
[(PR⁶R⁷R⁸R⁹)⁺]ₓR^{13'}-(-S⁻)ₓ
à une température de -78°C à 40°C, dans un solvant dans lequel l'initiateur se dissout au moins partiellement et qui ne gèle pas la réaction, pendant une durée suffisante pour polymériser le premier monomère, caractérisé en ce que:
R¹ est choisi dans le groupe formé par H, CN, un radical alkyle comportant de 1 à 6 atomes de carbone (qui peut être halogéné comme décrit précédemment) et aryle, R² est indépendamment choisi dans le groupe formé par CN, C(=X)R³, C(=X)NR⁴R⁵ et des noyaux hétérocycliques capables de stabiliser un α-anion, où X est NR (R étant un radical alkyle en C₁ à C₂₀), O ou S, R³ est un alkyle comportant de 1 à 20 atomes de carbone, un alkoxy comportant de 1 à 20 atomes de carbone ou un alkylthio comportant de 1 à 20 atomes de carbone; et R⁴ et R⁵ sont indépendamment l'un de l'autre un alkyle comportant de 1 à 20 atomes de carbone ou sont liés ensemble pour former un radical alkylène comportant de 2 à 5 atomes de carbone, formant donc un noyau avec 3 à 6 membres.
R⁶, R⁷, R⁸ et R⁹ représentent, indépendamment les uns des autres, un radical aralkyle, aryle ou alkyle comportant de 1 à 20 atomes de carbone (n'importe quelle paire formée de R⁶, R⁷, R⁸ et R⁹ pouvant être réunie pour former un noyau, ceci comprenant la possibilité que toutes les paires R⁶ à R⁹ peuvent être réunies pour former un noyau),
R¹⁰ représente un radical alkyle comportant de 1 à 20 atomes de carbone, un cycloalkyle comportant de 3 à 10 atomes de carbone, un radical aryle, un radical trialkylsilyle ou un radical électronégatif,
R^{11'}, R^{12'}et R^{13'} représentent, indépendamment les uns des autres, un radical aralkyle, aryle, cycloalkyle ou alkyle monovalent ou multivalent, dans lequel la valence est égale à x et qui peut être substitué par un ou plusieurs radicaux alkyle, cycloalkyle, halogène, phényle, nitro ou capteur d'électrons, oubien
R¹⁰ et R^{11'} peuvent être réunis pour former un hétérocycle, et
x est égal à 3 au moins,
pour former un (co)polymère ramifié intermédiaire;
le refroidissement brusque du (co)polymère ramifié intermédiaire au moyen d'un halogénure d'acyle, d'un anhydride d'acide ou d'une substance contenant un atome d'hydrogène actif pour former un (co)polymère de greffage; et l'isolation du (co)polymère ramifié formé.

12. Procédé de préparation d'un copolymère à trois blocs, comprenant:
la réaction d'au moins un monomère anioniquement polymérisable de formule: 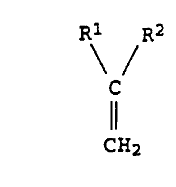 avec un initiateur de formule
[(PR⁶R⁷R⁸R⁹)⁺]₂ (R¹⁰NR^{11'}NR¹⁰)²⁻
[(PR⁶R⁷R⁸R⁹)⁺l₂(OR^{12'}O)²⁻
ou
[(PR⁶R⁷R⁸R⁹)⁺]₂ (SR13'S)²⁻
à une température de -78°C à 40°C, dans un solvant dans lequel l'initiateur se dissout au moins partiellement et qui ne gèle pas la réaction, pendant une durée suffisante pour polymériser le premier monomère, caractérisé en ce que:
R¹ est choisi dans le groupe formé par H, CN, un radical alkyle à chaîne linéaire ou ramifiée comportant de 1 à 6 atomes de carbone, qui peut être substitué par de 1 à (2n+1) atomes d'halogène, un radical alcényle à chaîne linéaire ou ramifiée comportant de 2 à 6 atomes de carbone, qui peut être substitué par de 1 à (2n-1) atomes d'halogène, un radical alcynyle à chaîne linéaire ou ramifiée comportant de 2 à 6 atomes e carbone, qui peut être substitué par de 1 à (2n-3) atomes d'halogène, et un radical aryle, où n est le nombre d'atomes de carbone dans le radical alkyle, alcényle ou alcynyle;
R² est indépendamment choisi dans le groupe formé par CN, C(=X)R³, C(=X)NR⁴R⁵ et des noyaux hétérocycliques capables de stabiliser un α-anion, où X est NR (R étant un radical alkyle en C₁ à C₂₀), O ou S, R³ est un alkyle comportant de 1 à 20 atomes de carbone, un alkoxy comportant de 1 à 20 atomes de carbone ou un alkylthio comportant de 1 à 20 atomes de carbone; et R⁴ et R⁵ représentent, indépendamment l'un de l'autre, un alkyle comportant de 1 à 20 atomes de carbone ou sont liés ensemble pour former un radical alkylène comportant de 2 à 5 atomes de carbone, formant donc un noyau avec 3 à 6 membres.
R⁶, R⁷, R⁸ et R⁹ représentent, indépendamment les uns des autres, un radical aralkyle, aryle ou alkyle comportant de 1 à 20 atomes de carbone (des paires quelconques formées de R⁶, R⁷, R⁸ et R⁹ pouvant être réunies pour former un noyau, ceci comprenant la possibilité que toutes les paires R⁶ à R⁹ peuvent être réunies pour former un noyau),
R¹⁰ représente un radical alkyle comportant de 1 à 20 atomes de carbone, un cycloalkyle comportant de 3 à 10 atomes de carbone, un radical aryle, un radical trialkylsilyle ou un radical électronégatif,
R^{11'}, R^{12'}et R^{13'} représentent, indépendamment les uns des autres, un radical aralkyle, arylényle, cycloalkylényle ou alkylényle bivalent, qui peut être substitué par un ou plusieurs radicaux alkyle, cycloalkyle, halogène, phényle, nitro ou capteur d'électrons; et
R¹⁰ et R^{11'} peuvent être liés ensemble pour former un hétérocycle;
l'addition d'un deuxième monomère de formule 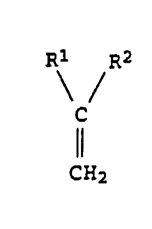 dans laquelle R¹ et R² ont les significations définies ci-avant, à une température de -78 à 40°C, et la réaction pendant une durée suffisante pour former un bloc (co)polymère distinct du bloc A et former ainsi un co(polymère) intermédiaire à trois blocs, le refroidissement brusque du (co)polymère intermédiaire à trois blocs au moyen d'un halogénure d'acyle, d'un anhydride d'acide ou d'une substance contenant un atome d'hydrogène actif pour former un (co)polymère à trois blocs; et
l'isolation du (co)polymère à trois blocs formé.

13. Procédé de préparation d'un copolymère de greffage, comprenant les étapes suivantes:
la polymérisation anionique d'un ou plusieurs monomères anioniquement polymérisables pour préparer un anion (co)polymère;
la réaction de l'anion (co)polymère avec un composé de formule 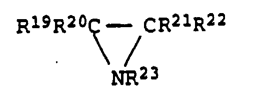 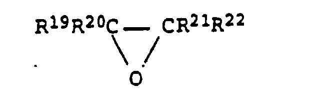 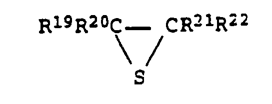 pour former un anion amide (co)polymère, oxyde (co)polymère ou sulfure (co)polymère, où R²³ représente un radical acyle et R¹⁹, R²⁰, R²¹ et R²² sont choisis indépendamment les uns des autres dans le groupe formé par H, un radical alkyle à chaîne linéaire ou ramifiée comportant de 1 à 20 atomes de carbone, un radical alkyle à chaîne linéaire ou ramifiée comportant de 1 à 20 atomes de carbone et substitué par de 1 à (2n+1) atomes d'halogène (où n est le nombre d'atomes de carbone dans le radical alkyle), un radical alcényle à chaîne linéaire ou ramifiée comportant de 2 à 20 atomes de carbone, un radical alcényle à chaîne linéaire ou ramifiée comportant de 2 à 20 atomes de carbone substitué par de 1 à (2n-1) atomes d'halogène (où n est le nombre d'atomes de carbone dans le radical alcényle), un radical alcynyle à chaîne linéaire ou ramifiée comportant de 2 à 20 atomes de carbone, un radical alcynyle à chaîne linéaire ou ramifiée comportant de 2 à 20 atomes de carbone substitué par de 1 à (2n-3) atomes d'halogène (où n est le nombre d'atomes de carbone dans le radical alcynyle), un radical aryle, aralkyle, hétérocyclyle, halogène et cyano, ou bien deux des restes R¹⁹, R²⁰, R²¹ et R²² peuvent être réunis pour former un radical alcylényle comportant de 1 à 6 atomes de carbone et former ainsi un noyau cycloalkylényle avec 3 à 8 membres;
Métathèse de l'anion amide (co)polymère, oxyde (co)polymère ou sulfure (co)polymère avec un sel de phosphonium de formule:
(PR⁶R⁷R⁸R⁹)⁺X⁻
dans laquelle R⁶, R⁷, R⁸ et R⁹ représentent, indépendamment les uns des autres, un radical alkyle comportant de 1 à 20 atomes de carbone, un radical aryle ou aralkyle, et où une paire quelconque de R⁶, R⁷, R⁸ et R⁹ peut être réunie pour former un noyau, ceci comprenant la possibilité que toutes les paires R⁶ à R⁹ peuvent être réunies pour former un noyau, et X est un anion inorganique, pour former un initiateur;
réaction de l'initiateur avec un ou plusieurs monomères de la formule: 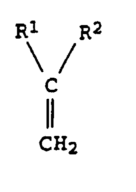 à une température de -78°C à 40°C, dans un solvant dans lequel se dissout tout au moins partiellement et qui ne, "gèle" pas la réaction, pendant une durée suffisante pour polymériser le(s) monomère(s) et former un mélange réactionnel, caractérisé en ce que:
R¹ est choisi dans le groupe formé par H, CN, un alkyle à chaîne linéaire ou ramifiée comportant de 1 à 6 atomes de carbone, qui peut être substitué par 1 à (2n+1) atomes d'halogène, un alcényle à chaîne linéaire ou ramifié comportant de 2 à 6 atomes de carbone qui peut être substitué par 1 à (2n-1) atomes d'halogène, un alcynyle à chaîne linéaire ou ramifiée de 2 à 6 atomes de carbone, qui peut être substitué par de 1 à (2n-3) atomes d'halogène, et un aryle, où n est le nombre d'atomes de carbone dans le radical alkyle, alcényle ou alcynyle, et
R² est indépendamment choisi dans le groupe formé par CN, C(=X) R³, C(=X)NR⁴R⁵ et des noyaux hétérocycliques capables de stabiliser un α-anion, où X est NR (R étant un alkyle en C₁ à C₂₀), O ou S, R³ est un alkyle comportant de 1 à 20 atomes de carbone, un alkoxy comportant de 1 à 20 atomes de carbone ou un alkylthio comportant de 1 à 20 atomes de carbone, et R⁴ et R⁵ sont indépendamment l'un de l'autre un alkyle comportant de 1 à 20 atomes de carbone ou sont liés ensemble pour former un radical alkylène comportant de 2 à 5 atomes de carbone, formant donc un noyau avec 3 à 6 membres;
refroidissement brusque du mélange réactionnel par un halogénure d'acyle, un anhydride d'acide ou une substance contenant un atome d'hydrogène actif pour former un (co)polymère de greffage; et
isolation du bloc (co)polymère de greffage ainsi formé.

14. Procédé selon la revendication 3, caractérisé en ce que ledit monomère anioniquement polymérisable est choisi dans le groupe formé par le styrène, l'α-méthylstyrène, le styrène ou l'α-méthylstyrène comportant de 1 à 5 substituants alkyle en C₁ à C₄ et/ou alkoxy en C₁ à C₄ sur le noyau phényle, le butadiène, l'isoprène, le diméthylbutadiène ou des mélanges de ceux-ci.

15. Procédé selon la revendication 13, caractérisé en ce que R¹⁹ et R²⁰ représentent H, et R²¹ et R²² sont, indépendamment l'un de l'autre, choisis dans le groupe formé par H, un radical alkyle à chaîne linéaire ou ramifiée comportant de 1 à 10 atomes de carbone (qui peut être substitué par 1 à (2n+1) atomes d'halogène, où n est le nombre d'atomes de carbone du radical alkyle), un radical alcényle à chaîne linéaire ou ramifiée comportant de 2 à 6 atomes de carbone (qui peut être substitué par 1 à (2n-1) atomes d'halogène, où n est le nombre d'atomes de carbone du radical alcényle), un radical phényle, ou un radical phényle comportant de 1 à 3 substituants choisis dans le groupe formé par un radical alkyle comportant de 1 à 6 atomes de carbone, un radical alkoxy comportant de 1 à 4 atomes de carbone, un radical phényle ou halogène.

16. Copolymère de greffage de la formule
(co)polymère-(CR¹⁹R²⁰CR²¹R²²NR²³)-A
(co)polymère-(CR¹⁹R²⁰CR²¹R²²O)-A
ou
(co)polymère-(CR¹⁹R²⁰CR²¹R²²S)-A
dans laquelle:
le (co)polymère est produit par polymérisation anionique;
R¹⁹, R²⁰, R²¹ et R²² sont, indépendamment les uns des autres, choisis dans le groupe formé par H, un radical alkyle à chaîne linéaire ou ramifiée comportant de 1 à 20 atomes de carbone substitué par 1 à (2n+1) atomes d'halogène (où n est le nombre d'atomes de carbone du radical alkyle), un radical alcényle à chaîne linéaire ou ramifiée comportant de 2 à 20 atomes de carbone, un radical alcényle à chaîne linéaire ou ramifiée comportant de 2 à 20 atomes de carbone substitué par de 1 à (2n-1) atomes d'halogène (où n est le nombre d'atomes de carbone dans le radical alcényle), un radical alcynyle à chaîne linéaire ou ramifiée comportant de 2 à 20 atomes de carbone, un radical alcynyle à chaîne linéaire ou ramifiée comportant de 2 à 20 atomes de carbone substitué par de 1 à (2n-3) atomes d'halogène (où n est le nombre d'atomes de carbone dans le radical alcynyle), un radical aryle, aralkyle, hétérocyclyle, halogène et cyano, ou bien deux des restes R¹⁹, R²⁰, R²¹ et R²² peuvent être réunis pour former un radical alcylényle comportant de 1 à 6 atomes de carbone et former ainsi un noyau cycloalkylényle avec 3 à 8 membres;
R²³ est un radical acyle; et
A représente un ou plusieurs blocs (co)polymères distincts d'un ou plusieurs monomères de la formule: 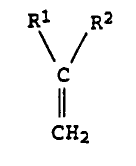 dans laquelle:
R¹ est choisi dans le groupe formé par H, CN, un radical alkyle à chaîne linéaire ou ramifiée comportant de 1 à 6 atomes de carbone, qui peut être substitué par 1 à (2n+1) atomes d'halogène, un alcényle à chaîne linéaire ou ramifiée comportant de 2 à 6 atomes de carbone qui peut être substitué par 1 à (2n-1) atomes d'halogène, un alcynyle à chaîne linéaire ou ramifiée de 2 à 6 atomes de carbone, qui peut être substitué par de 1 à (2n-3) atomes d'halogène, et un radical aryle, où n est le nombre d'atomes de carbone dans le radical alkyle, alcényle ou alcynyle; et
R² est indépendamment choisi dans le groupe formé par CN, C(=X) R³, C(=X)NR⁴R⁵ et des noyaux hétérocycliques capables de stabiliser un α-anion, où X représente NR, (R étant un alkyle en C₁ à C₂₀), O ou S, R³ est un alkyle comportant de 1 à 20 atomes de carbone, un alkoxy comportant de 1 à 20 atomes de carbone ou un alkylthio comportant de 1 à 20 atomes de carbone; et R⁴ et R⁵ sont indépendamment l'un de l'autre un alkyle comportant de 1 à 20 atomes de carbone ou sont liés ensemble pour former un radical alkylène comportant de 2 à 5 atomes de carbone, formant donc un noyau avec 3 à 6 membres;

17. Co(polymère) de greffage selon la revendication 16, caractérisé en ce que chaque bloc présente un poids moléculaire moyen pondéral ou numérique de 300 à 500 000 g/mole, plus préférentiellement de 500 à 300 000 g/mole.

18. (Co)polymère de greffage selon la revendication 16, présentant une valeur M_{w}/Mₙ inférieure ou égale à 2,0.

19. (Co)polymère de greffage selon la revendication 16, caractérisé en ce que le (co)polymère de greffage est produit par polymérisation anionique de styrène, d'α-méthylstyrène, de styrène ou d'a-méthylstyrène comportant de 1 à 5 substituants alkyle en C₁ à C₄ et/ou alkoxy en C₁ à C₄ sur le noyau phényle, de butadiène, d'isoprène, de diméthylbutadiène ou de mélanges de ceux-ci.
